# EUROPEAN PATENT APPLICATION

(11) **EP 4 468 832 A1**
(43) Date of publication of application: **27.11.2024**
(21) Application number: 23765959.4
(22) Date of filing: 06.03.2023
(51) Int. Cl.: H05K 5/02, H04N 23/00, H04M 1/00

(54) **ELECTRONIC DEVICE AND HOUSING ASSEMBLY**

(30) Priority: 10.03.2022 CN 202210240793
(71) Applicant: Huawei Technologies Co., Ltd., Shenzhen, Guangdong 518129 (CN)
(72) Inventor: DING, Xiaoheng, Shenzhen, Guangdong 518129 (CN); DING, Ruiming, Shenzhen, Guangdong 518129 (CN); KUO, Li-Te, Shenzhen, Guangdong 518129 (CN); CHEN, Kai, Shenzhen, Guangdong 518129 (CN); ZHANG, Kaiyuan, Shenzhen, Guangdong 518129 (CN); LU, Lei, Shenzhen, Guangdong 518129 (CN); LV, Ren, Shenzhen, Guangdong 518129 (CN)
(74) Representative: Pfenning, Meinig & Partner mbB
(86) International application number: PCT/CN2023/079929
(87) International publication number: WO 2023/169381

(57) **Abstract**

This application discloses an electronic device and a housing assembly. The electronic device includes at least the housing assembly and a camera module. The housing assembly includes a housing and a movable support. The housing has an avoidance hole and an accommodation cavity that communicate with each other. The movable support is disposed corresponding to the avoidance hole and includes a light-transmitting part. The movable support is movably connected to the housing, so that the movable support is capable of extending out of the accommodation cavity through the avoidance hole to form an avoidance space or retracting into the accommodation cavity. The camera module is fixedly disposed in the accommodation cavity, and a light inlet part of the camera module is opposite to the light-transmitting part. The movable support and the camera module are disposed independently of each other.

## Description

This application claims priority to Chinese Patent Application No. 202210240793.9, filed with the China National Intellectual Property Administration on March 10, 2022 and entitled "ELECTRONIC DEVICE AND HOUSING ASSEMBLY", which is incorporated herein by reference in its entirety.

### TECHNICAL FIELD

Embodiments of this application relate to the field of terminal technologies, and in particular, to an electronic device and a housing assembly.

### BACKGROUND

With development of the society, electronic devices such as smartphones or tablet computers are widely used in people's daily life. The electronic devices provide functions such as entertainment, social networking, or office work for people. Because people have increasing needs on the functions of the electronic devices, the electronic devices have more functions. For example, people have increasingly high requirements on photographing performance of the electronic devices, and people expect to obtain high-resolution images. To meet a photographing requirement, a quantity and types of rear functional components in the electronic device increase. The functional components may be used for photographing, light sensing, or lighting. For example, when a functional component is a camera module that implements a photographing function, a size of the camera module is large, to obtain a high-definition image. The electronic device has a requirement for overall lightness and thinness, and an overall thickness and weight of the electronic device need to meet use requirements. However, because the size of the camera module is large, a sufficient installation space needs to be reserved to accommodate the camera module and ensure that the camera module may work normally. Therefore, an area in which the camera module is disposed and that is on the electronic device is set to a protruding structure, so that appearance aesthetics of the electronic device is also implemented when a corresponding function is implemented by using the camera module. However, the protruding structure of the electronic device affects an overall appearance of the electronic device. In addition, an uneven back surface of the electronic device affects placement or storage of the electronic device, and affects user experience and satisfaction.

### SUMMARY

Embodiments of this application provide an electronic device and a housing assembly, to resolve a problem that a bulge in an area corresponding to a camera module affects aesthetics and use inconvenience.

A first aspect of this application provides an electronic device, including at least a housing assembly and a camera module. The housing assembly includes a housing and a movable support. The housing has an avoidance hole and an accommodation cavity that communicate with each other. The avoidance hole penetrates the housing. The movable support is disposed corresponding to the avoidance hole. The movable support includes a light-transmitting part. The movable support is movably connected to the housing, so that the movable support is capable of extending out of the accommodation cavity through the avoidance hole to form an avoidance space or retracting into the accommodation cavity. The camera module is fixedly disposed in the accommodation cavity, and a light inlet part of the camera module is opposite to the light-transmitting part. The movable support and the camera module are disposed independently of each other. The camera module includes a lens assembly. The entire lens assembly or at least one lens that is close to the movable support and that is in the lens assembly is capable of moving in the avoidance space.

The electronic device provided in an embodiment of this application includes the housing assembly and the camera module. The housing assembly includes the housing and the movable support. The movable support may move relative to the housing, so that the movable support is capable of extending out of the accommodation cavity through the avoidance hole to form the avoidance space or retracting into the accommodation cavity. The camera module includes the lens assembly. When the camera module is in a working state, and the entire lens assembly or at least one lens that is close to the movable support needs to extend to perform a focusing action, the movable support extends out of the accommodation cavity of the housing, to increase a distance between the light-transmitting part and the camera module, and provide an avoidance space for the extended lens assembly. In this way, positional interference between the light-transmitting part and the lens assembly does not occur. When the camera module is in a non-working state, and the lens assembly is in a retracted state, the movable support retracts into the accommodation cavity of the housing, so that the movable support does not protrude from an outer surface of the housing. This ensures good flatness on the outer surface of the electronic device, and helps improve appearance aesthetics and consistency of the electronic device.

In a possible implementation, the electronic device further includes a driving assembly. The driving assembly is disposed in the accommodation cavity. The driving assembly has a fastening end and a movable end. The fastening end of the driving assembly is connected to the housing. The movable end of the driving assembly is connected to the movable support. The driving assembly drives, through the movable end, the movable support to move in an axial direction of the avoidance hole relative to the housing. The driving assembly may control, in an electrical control manner, the movable support to extend or retract. This helps implement automatic control of the movable support, improves position movement precision of the movable support, and ensures synchronization between movement of the movable support and movement of the lens assembly of the camera module.

In a possible implementation, the driving assembly includes at least one group of first driving units and at least one group of second driving units. The first driving unit and the second driving unit are disposed independently of each other. The first driving unit drives the movable support to extend out of the accommodation cavity. The second driving unit drives the movable support to retract into the accommodation cavity. The first driving unit and the second driving unit can work independently without movement interference. Driving manners of the first driving unit and the second driving unit may be the same or different. This helps improve flexibility and diversity of driving manner selection, and improves flexibility of a structural design of the first driving unit or the second driving unit, to adapt to different installation spaces and application scenarios.

In a possible implementation, the first driving unit includes at least one first electrostrictive body. When the first electrostrictive body shrinks, the first driving unit exerts force on the movable support, to drive the movable support to extend out of the accommodation cavity. Because the first electrostrictive body of the first driving unit may be configured to generate power for driving the movable support to move, and a volume of the first electrostrictive body may be designed to be small, an overall structural design of the entire first driving unit may be more compact, and the entire first driving unit occupies small space. This helps release more space in the accommodation cavity to arrange more mechanical pieces, or helps design the electronic device to be thin and light.

In a possible implementation, one end of the first electrostrictive body is connected to the housing, and the other end of the first electrostrictive body is connected to the movable support. The first electrostrictive body may directly drive the movable support by shrinking of the first electrostrictive body. Therefore, an additional transmission structure does not need to be disposed between the first electrostrictive body and the movable support. This helps simplify a structural design between the first electrostrictive body and the movable support. A transmission chain between the first electrostrictive body and the movable support is short. This helps improve transmission efficiency between the first electrostrictive body and the movable support, reduces error accumulation, and improves position movement precision of the movable support.

In a possible implementation, the end of the first electrostrictive body is connected to an inner wall that is of the housing and that faces the accommodation cavity, and the other end of the first electrostrictive body is connected to an end part that is of the movable support and that is located in the accommodation cavity and that is away from the housing. In this way, a distance between the fastening end and the movable end may be increased, and a length of the first electrostrictive body may be further increased. This helps increase a shrinkage amount of the first electrostrictive body in limited space, and further increases a displacement amount of the movable support.

In a possible implementation, each group of first driving units includes two first electrostrictive bodies. Projections or extension lines of the projections of the two first electrostrictive bodies intersect on a first plane. The first plane is a plane perpendicular to the axial direction. The two first electrostrictive bodies simultaneously exert driving force on the movable support. This helps ensure a force balance on the movable support, and improves stability of a moving process.

In a possible implementation, two ends of the first electrostrictive body are separately connected to the housing. A middle area of the first electrostrictive body is connected to the movable support. In the axial direction of the avoidance hole, the two ends of the first electrostrictive body are located on a same side of the middle area of the first electrostrictive body.

In a possible implementation, the first driving unit further includes a first actuating piece. The movable support is connected to the first actuating piece. The first electrostrictive body intersects the axial direction of the avoidance hole. Two ends of the first electrostrictive body are respectively connected to two ends of the first actuating piece. When the first electrostrictive body shrinks, the first actuating piece is driven to bulge in the axial direction of the avoidance hole, to drive the movable support to extend out of the accommodation cavity.

In a possible implementation, the first actuating piece is a spring plate. When the first actuating piece bulges toward the movable support, the first actuating piece may accumulate elastic potential energy. When the movable support retracts into the accommodation cavity, the first actuating piece may release the elastic potential energy, to exert auxiliary force on the movable support during a retracting process.

In a possible implementation, the first actuating piece includes two first rod pieces. One first rod piece is rotatably connected to the other first rod piece. The first rod piece has good rigidity. The first actuating piece uses a rod structure that is not easily deformed. This helps increase a load of the first actuating piece, and reduces a possibility of a deviation between a displacement amount of the movable support when the first actuating piece is not accidentally deformed and a displacement amount of the movable support when the first actuating piece is accidentally deformed.

In a possible implementation, in the axial direction of the avoidance hole, the first actuating piece is disposed on each of two sides of the first electrostrictive body. A shrinkage amount of the first electrostrictive body may be amplified by using the first actuating pieces on the two sides of the first electrostrictive body, so that a displacement amount of the movable support is greater than the shrinkage amount of the first electrostrictive body. Therefore, the movable support may be driven to obtain a larger displacement amount by using the first electrostrictive body with a shorter length.

The first actuating piece protrudes in a direction away from the first electrostrictive body, the housing includes a first limiting part, a first actuating piece away from the movable support is connected to the first limiting part, and the movable support is connected to a first actuating piece close to the movable support. Alternatively, the first actuating piece protrudes in a direction close to the first electrostrictive body, the housing includes a first limiting part, a first actuating piece close to the movable support is connected to the first limiting part, and the movable support is connected to a first actuating piece away from the movable support.

In a possible implementation, the first electrostrictive body includes a shape memory alloy body or a piezoelectric telescopic body.

In a possible implementation, the second driving unit includes at least one second electrostrictive body. When the second electrostrictive body shrinks, the second driving unit exerts force on the movable support, to drive the movable support to retract into the accommodation cavity. Because the second electrostrictive body of the second driving unit may be configured to generate power for driving the movable support to move, and a volume of the second electrostrictive body may be designed to be small, an overall structural design of the entire second driving unit may be more compact, and the entire second driving unit occupies small space. This helps release more space in the accommodation cavity to arrange more mechanical pieces, or helps design the electronic device to be thin and light.

In a possible implementation, one end of the second electrostrictive body is connected to the housing, and the other end of the second electrostrictive body is connected to an end part that is of the movable support and that is away from the camera module. The second electrostrictive body may directly drive the movable support by shrinking of the second electrostrictive body. Therefore, an additional transmission structure does not need to be disposed between the second electrostrictive body and the movable support. This helps simplify a structural design between the second electrostrictive body and the movable support. A transmission chain between the second electrostrictive body and the movable support is short. This helps improve transmission efficiency between the second electrostrictive body and the movable support, helps reduce error accumulation, and improves position movement precision of the movable support.

In a possible implementation, the housing includes an adapter part. The adapter part is located on a side that is of the movable support and that is close to the camera module. The end of the second electrostrictive body is connected to the adapter part, and the other end of the second electrostrictive body is connected to the movable support. This helps increase a length of the second electrostrictive body. In this way, when the second electrostrictive body shrinks, a large shrinkage amount may be obtained, and the movable support may obtain a large amount of displacement.

In a possible implementation, each group of second driving units includes two second electrostrictive bodies. Projections or extension lines of the projections of the two second electrostrictive bodies intersect on the first plane. The first plane is the plane perpendicular to the axial direction of the avoidance hole. When second electrostrictive bodies shrink, two second electrostrictive bodies that are disposed to intersect each other simultaneously exert driving force on the movable support. This helps ensure a force balance on the movable support, and improves stability of a moving process.

In a possible implementation, two ends of the second electrostrictive body are separately connected to the housing. A middle area of the second electrostrictive body is connected to the movable support. The two ends of the second electrostrictive body are located on a same side of the middle area of the second electrostrictive body.

In a possible implementation, the second driving unit further includes a second actuating piece. The movable support is connected to the second actuating piece. The second electrostrictive body intersects the axial direction of the avoidance hole. Two ends of the second electrostrictive body are respectively connected to two ends of the second actuating piece. When the second electrostrictive body shrinks, the second actuating piece is driven to bulge in the axial direction of the avoidance hole, to drive the movable support to retract into the accommodation cavity.

In a possible implementation, the second actuating piece is a spring plate. When the second actuating piece bulges in a direction away from the movable support, the second actuating piece may accumulate elastic potential energy. When the movable support extends out of the accommodation cavity, the second actuating piece may release the elastic potential energy, to exert auxiliary force on the movable support during an extending process.

In a possible implementation, the second actuating piece includes two second rod pieces. One second rod piece is rotatably connected to the other second rod piece. The second rod piece has good rigidity. The second actuating piece uses a rod structure that is not easily deformed. This helps increase a load of the second actuating piece, and reduces a possibility of a deviation between a displacement amount of the movable support when the second actuating piece is not accidentally deformed and a displacement amount of the movable support when the second actuating piece is accidentally deformed.

In a possible implementation, in the axial direction of the avoidance hole, the second actuating piece is disposed on each of two sides of the second electrostrictive body. A shrinkage amount of the second electrostrictive body may be amplified by using the second actuating pieces on the two sides of the second electrostrictive body, so that a displacement amount of the movable support is greater than the shrinkage amount of the second electrostrictive body. Therefore, the movable support may be driven to obtain a larger displacement amount by using the second electrostrictive body with a shorter length.

The second actuating piece protrudes in a direction away from the second electrostrictive body, the housing includes a second limiting part, a second actuating piece close to the movable support is connected to the second limiting part, and the movable support is connected to a second actuating piece away from the movable support. Alternatively, the second actuating piece protrudes in a direction close to the second electrostrictive body, the housing includes a second limiting part, a second actuating piece away from the movable support is connected to the second limiting part, and the movable support is connected to a second actuating piece close to the movable support.

In a possible implementation, the second electrostrictive body includes a shape memory alloy body or a piezoelectric telescopic body.

In a possible implementation, the second driving unit includes an elastic piece. One end of the elastic piece is connected to the housing, and the other end of the elastic piece is connected to the movable support. When the first driving unit drives the movable support to extend out of the accommodation cavity, the elastic piece accumulates energy. When the first driving unit stops driving the movable support, the elastic piece releases the energy, to drive the movable support to retract into the accommodation cavity.

In a possible implementation, the driving assembly includes a motor and a transmission rod. One of the motor and the transmission rod is connected to the housing, the other is connected to the movable support. The motor drives the transmission rod to move in the axial direction of the avoidance hole, to drive the movable support to move. A driving manner in which the motor and the transmission rod are used helps improve a bearing capacity of the driving assembly, to adapt to a scenario in which a movable support is heavy.

In a possible implementation, the housing assembly further includes an adapter. The adapter is connected to the movable support and the driving assembly. The driving assembly exerts axial force on the movable support through the adapter, to drive the adapter and the movable support to move.

In a possible implementation, in the axial direction of the avoidance hole, the adapter is movably connected to the movable support. The housing assembly also includes a cushioning piece. The cushioning piece is disposed between the movable support and the adapter and generates abutting force in the axial direction of the avoidance hole.

In a possible implementation, the electronic device further includes a locking assembly. The locking assembly is connected to the housing and the movable support. The locking assembly is configured to lock the movable support, so that the movable support stays in a current position. The movable support is limited and restricted by the locking assembly, and is not easy to move and deviate from the current position. This ensures good position stability of the movable support.

In a possible implementation, the locking assembly includes a first locking piece and a second locking piece. One of the first locking piece and the second locking piece is disposed on the housing, the other is disposed on the movable support. The first locking piece and the second locking piece lock each other, so that the movable support stays in a current position.

In a possible implementation, the first locking piece and the second locking piece lock each other through magnetic attraction force.

In a possible implementation, the locking assembly includes a driver and a locking body. The driver drives the locking body to move relative to the movable support, to lock or release the movable support.

In a possible implementation, the movable support includes an annular part. The annular part is movably connected to the housing. The light-transmitting part is disposed at an end part that is of the annular part and that is away from the camera module. The light-transmitting part is a light-transmitting cover plate.

In a possible implementation, the housing assembly further includes a flexible sealing piece. The flexible sealing piece is disposed between the housing and the movable support. The flexible sealing piece seals the housing and the movable support, to reduce a possibility that water, dust, or sundries enters the inside of the electronic device from a position between the housing and the movable support.

In a possible implementation, the housing includes a rear cover and a middle frame. The rear cover and the middle frame form the accommodation cavity. The avoidance hole is disposed on the rear cover.

In a possible implementation, the movable support is movably connected to the rear cover.

In a possible implementation, the housing includes a first guiding piece. The movable support includes a second guiding piece. The first guiding piece and the second guiding piece are movably connected. When the movable support extends out of or retracts into the accommodation cavity, the first guiding piece and the second guiding piece jointly guide the movable support, to ensure a smooth movement process of the movable support.

A second aspect of the embodiments of this application provides a housing assembly, used in an electronic device. The housing assembly includes a housing and a movable support. The housing has an avoidance hole and an accommodation cavity that communicate with each other. The avoidance hole penetrates the housing. The movable support is disposed corresponding to the avoidance hole. The movable support includes a light-transmitting part. The movable support is movably connected to the housing, so that the movable support is capable of extending out of the accommodation cavity through the avoidance hole to form an avoidance space or retracting into the accommodation cavity.

### BRIEF DESCRIPTION OF DRAWINGS

FIG. 1 is a schematic diagram of a scenario according to an embodiment of this application;
FIG. 2 is a schematic diagram of a partially exploded structure of an electronic device according to an embodiment of this application;
FIG. 3 is a schematic diagram of a partial sectional structure of an electronic device including a movable support in a retracted position according to an embodiment of this application;
FIG. 4 is a schematic diagram of a partial sectional structure of an electronic device including a movable support in an extended position according to an embodiment of this application;
FIG. 5 is a schematic diagram of a partial sectional structure of an electronic device according to an embodiment of this application;
FIG. 6 is a schematic diagram of a partial sectional structure of an electronic device according to an embodiment of this application;
FIG. 7 is a schematic diagram of a partial sectional structure of an electronic device according to another embodiment of this application;
FIG. 8 is a schematic diagram of a partial structure of an electronic device according to another embodiment of this application;
FIG. 9 is a schematic diagram of a partially exploded structure of an electronic device according to another embodiment of this application;
FIG. 10 is a schematic diagram of a sectional structure in an A-A direction in FIG. 8;
FIG. 11 is a schematic diagram of a partially exploded structure of an electronic device according to another embodiment of this application;
FIG. 12 is a schematic diagram of a partial sectional structure of an electronic device including a movable support in a retracted position according to another embodiment of this application;
FIG. 13 is a schematic diagram of a partial sectional structure of an electronic device including a movable support in an extended position according to an embodiment of this application;
FIG. 14 is a schematic diagram of a partial sectional structure of an electronic device according to still another embodiment of this application;
FIG. 15 is a schematic diagram of a partial sectional structure of an electronic device according to still another embodiment of this application;
FIG. 16 is a schematic diagram of a partial sectional structure of an electronic device according to still another embodiment of this application;
FIG. 17 is a schematic diagram of a partial sectional structure of an electronic device according to still another embodiment of this application;
FIG. 18 is a schematic diagram of a partial sectional structure of an electronic device according to still another embodiment of this application;
FIG. 19 is a schematic diagram of a partial sectional structure of an electronic device including a movable support in an extended position according to still another embodiment of this application;
FIG. 20 is a schematic diagram of a partial sectional structure of an electronic device including a movable support in an extended position according to still another embodiment of this application;
FIG. 21 is a schematic diagram of a partial sectional structure of an electronic device according to still another embodiment of this application;
FIG. 22 is a schematic diagram of a partial sectional structure of an electronic device according to still another embodiment of this application;
FIG. 23 is a schematic diagram of a partial sectional structure of an electronic device according to still another embodiment of this application;
FIG. 24 is a schematic diagram of a partial sectional structure of an electronic device according to still another embodiment of this application;
FIG. 25 is a schematic diagram of a partial sectional structure of an electronic device according to still another embodiment of this application;
FIG. 26 is a schematic diagram of a partial sectional structure of an electronic device according to still another embodiment of this application;
FIG. 27 is a schematic diagram of a partial sectional structure of an electronic device according to yet another embodiment of this application;
FIG. 28 is a schematic diagram of a partial sectional structure of an electronic device including a locking assembly according to an embodiment of this application;
FIG. 29 is a schematic diagram of a partial sectional structure of an electronic device including a locking assembly according to another embodiment of this application; and
FIG. 30 is a schematic diagram of a partial sectional structure of an electronic device including a locking unit according to an embodiment of this application.

### Descriptions of reference numerals:

10: electronic device;
20: display screen;
30: housing assembly;
   31: housing; 31a: accommodation cavity; 31b: avoidance hole; 31c: connecting piece; 31d: first limiting part; 31e: adapter part; 31f: second limiting part; 31g: first guiding piece; 311: rear cover; 312: middle frame;
   32: movable support; 32a: connecting boss: 321: light-transmitting part; 322: annular part; 323: second guiding piece;
   33: flexible sealing piece;
   34: adapter; 341: accommodation space;
   35: cushioning piece;
40: main circuit board;
50: electronic component;
60: camera module; 61: housing; 62: lens assembly;
70: driving assembly;
   71: first driving unit; 711: first electrostrictive body; 712: first actuating piece; 7121: first rod piece;
   72: second driving unit; 721: second electrostrictive body; 722: second actuating piece; 7221: second rod piece; 723: elastic piece;
   73: motor;
   74: transmission rod;
80: locking assembly;
   81: first locking piece;
   82: second locking piece;
   83: driver;
   831: electrostrictive piece; 832: elastic body;
   84: locking body;
90: position sensor;
100: excitation circuit;
110: locking unit; 111: driving mechanism; 1111: electrostrictive piece; 1112: elastic component; 112: locking pin;
S: axis; and
X: axial direction.

### DESCRIPTION OF EMBODIMENTS

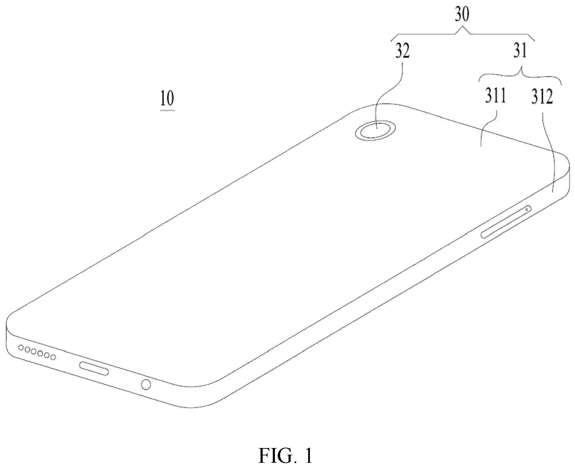

An electronic device in embodiments of this application may be a wireless communication device, a tablet computer (portable android device, PAD), or a personal digital assistant (personal digital assistant, PDA). A form of the electronic device is not specifically limited in embodiments of this application. In embodiments of this application, FIG. 1 schematically shows a structure of an electronic device 10 according to an embodiment of this application. Refer to FIG. 1. An example in which the electronic device 10 is a wireless communication device is used for description. The wireless communication device may be, for example, but is not limited to, a mobile phone.

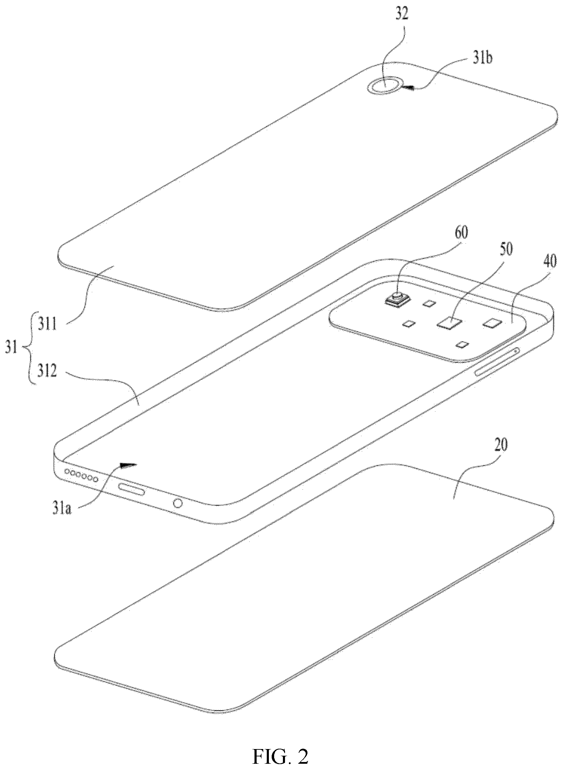

FIG. 2 schematically shows a partially exploded structure of the electronic device 10. Refer to FIG. 2. The electronic device 10 in embodiments of this application may include a display screen 20 and a housing assembly 30. The housing assembly 30 may provide an installation basis for other mechanical pieces. The display screen 20 is connected to the housing assembly 30. The display screen 20 has a display area. The display area is used to display image information, to present the image information to a user. In some examples, the housing assembly 30 includes a housing 31. The housing 31 has an accommodation cavity 31a.

The electronic device 10 may include a main circuit board 40 and an electronic component 50. The main circuit board 40 is connected to the housing 31 and is located in the accommodation cavity 31a. The main circuit board 40 may be a printed circuit board (printed circuit board, PCB). The electronic component 50 is disposed on the main circuit board 40. For example, the electronic component 50 is soldered to the main circuit board 40 through a soldering process. The electronic component 50 includes but is not limited to a central processing unit (central processing unit, CPU) or a power management integrated circuit (power management IC, PMIC).

The electronic device 10 may further include a functional component fixedly disposed in the accommodation cavity 31a. In embodiments of this application, an example in which the functional component includes a camera module 60 is used for description. The camera module 60 is configured to perform photographing and imaging on a target scene. In some examples, the camera module 60 may include a housing 61, a photosensitive sensor, a focusing motor, and a lens assembly 62. The photosensitive sensor, the focusing motor, and the lens assembly 62 may be connected to the housing 61. The housing 61 may be fixedly connected to the housing 31, so that a position of the camera module 60 remains fixed. For example, the housing 61 of the camera module 60 may be connected to the housing 31 through soldering, bonding, or fastening by using a fastener. The focusing motor may drive the entire lens assembly 62 or some lenses in the lens assembly 62 to move in a direction of an optical axis, to implement focusing and obtain a clear image. The optical axis is an axis of symmetry in an optical system, and a light beam rotates around the optical axis without any change in optical characteristics. Generally, the optical axis is a line that passes through a lens center in the lens assembly 62 in a direction from an object side to an image side. The camera module 60 may be electrically connected to the main circuit board 40, for example, may be connected by using a flexible printed circuit (flexible printed circuit, FPC).

The housing 31 of the housing assembly 30 has an avoidance hole 31b. The avoidance hole 31b penetrates the housing 31, to communicate an external environment of the housing 31 with the accommodation cavity 31a. The housing assembly 30 further includes a movable support 32. The movable support 32 is disposed corresponding to the avoidance hole 31b of the housing 31. The movable support 32 may be plug-fitted with the avoidance hole 31b of the housing 31. For example, the movable support 32 may be in a clearance fit with the avoidance hole 31b. The avoidance hole 31b of the housing 31 is configured to avoid the movable support 32, so that no position interference exists between the housing 31 and the movable support 32. The movable support 32 is movably connected to the housing 31, so that the movable support 32 is capable of extending out of the accommodation cavity 31a through the avoidance hole 31b to form an avoidance space or retracting into the accommodation cavity 31a of the housing 31. It should be noted that the camera module 60 has a light inlet part. In some examples, a lens or a prism that is in the lens assembly 62 and that is closest to the movable support 32 is the light inlet part.

The movable support 32 is limited and restricted by the housing 31, and the movable support 32 has a degree of freedom of movement in an axial direction X of the avoidance hole 31b. It should be noted that the axial direction X of the avoidance hole 31b may be an extension direction of the avoidance hole 31b. For example, a cross-sectional shape of the avoidance hole 31b may be a circle, an ellipse, or a polygon. This is not limited in this application. In some implementations, when the movable support 32 is subject to force in the axial direction X of the avoidance hole 31b, the movable support 32 may move relative to the housing 31 in the axial direction X of the avoidance hole 31b, so that the movable support 32 is capable of extending out of the accommodation cavity 31a through the avoidance hole 31b to form the avoidance space or retracting into the accommodation cavity 31a of the housing 31. In some other implementations, the movable support 32 may not necessarily move relative to the housing 31 in the axial direction X of the avoidance hole 31b, or the movable support 32 may move in a direction that deviates from the axial direction X of the avoidance hole 31b, provided that the avoidance hole 31b is capable of extending out of the accommodation cavity 31a. Therefore, force to which the movable support 32 is subject is not necessarily completely in the axial direction X of the avoidance hole 31b, provided that there is a component of the force in the axial direction X of the avoidance hole 31b. The following uses the previous implementation as an example for description. However, it may be understood that this application is not limited to the previous implementation.

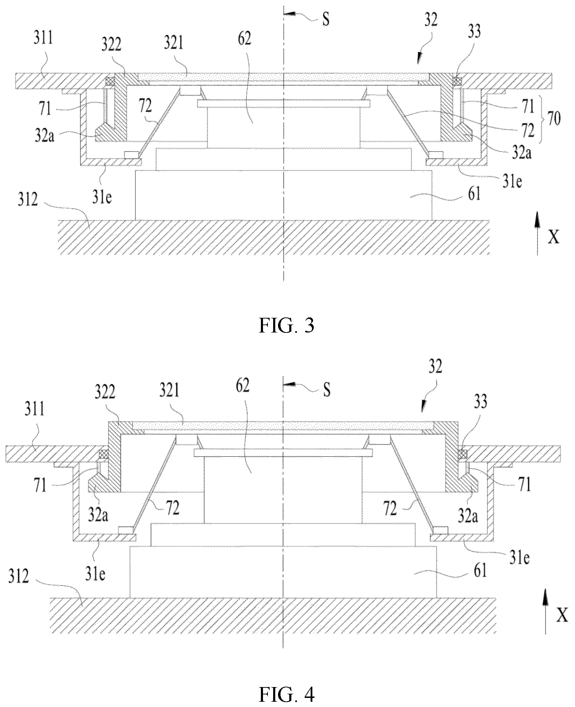

FIG. 3 schematically shows a partial sectional structure of the electronic device 10 including the movable support 32 in a retracted position according to an embodiment of this application. As shown in FIG. 3, when the movable support 32 retracts into the accommodation cavity 31a of the housing 31, the movable support 32 has the retracted position. In some examples, when the movable support 32 is in the retracted position, an outer surface of the movable support 32 may be flush with an outer surface of the housing 31, and the movable support 32 does not protrude from the outer surface of the housing 31. This ensures a flat back surface of the electronic device 10, and helps improve appearance aesthetics and consistency of the electronic device 10. When the movable support 32 extends out of the accommodation cavity 31a of the housing 31, FIG. 4 schematically shows a partial sectional structure of the electronic device 10 including the movable support 32 in an extended position according to an embodiment of this application. Refer to FIG. 4. The movable support 32 has the extended position. A part of the movable support 32 protrudes from the housing 31 and is away from an outer surface of the camera module 60. In some examples, the movable support 32 remains connected to the housing 31 in the extended position or the retracted position.

As shown in FIG. 4, the movable support 32 includes a light-transmitting part 321 with light-transmitting performance. The light inlet part of the camera module 60 is opposite to the light-transmitting part 321. The light inlet part of the camera module 60 is configured to receive light. It should be noted that, in some embodiments, when a first lens of the lens assembly 62 is a lens, a direction of the optical axis of the lens assembly 62 may be parallel to or coincide with the axial direction X of the avoidance hole 31b; and in some other embodiments, when a first lens of the lens assembly 62 is a prism that is generally used for a periscope camera module, a direction of the optical axis of the lens assembly 62 is turned 90 degrees at the first lens, so the optical axis of the lens assembly 62 is perpendicular to the axial direction X of the avoidance hole 31b. Light outside the electronic device 10 may pass through the light-transmitting part 321 and is incident to the light inlet part of the camera module 60. The movable support 32 extends out of or retracts into the accommodation cavity 31a of the housing 31, so that the light-transmitting part 321 is away from or close to the camera module 60. In some examples, the light-transmitting part 321 may be disposed corresponding to one or more camera modules 60. This is not limited in embodiments of this application.

Refer to FIG. 3. When the camera module 60 is in a working state, the lens assembly 62 of the camera module 60 may extend in the axial direction X of the avoidance hole 31b, to perform actions such as focusing. When the movable support 32 extends out of the accommodation cavity 31a of the housing 31, the light-transmitting part 321 of the movable support 32 moves away from the camera module 60, so that a distance between the light-transmitting part 321 and the camera module 60 is increased. In this way, larger space is released, and the lens assembly 62 may smoothly extend without contact with the light-transmitting part 321. It should be noted that, when the movable support 32 extends out of the accommodation cavity 31a, the space released after the distance between the light-transmitting part 321 and the camera module 60 is increased forms the avoidance space. In some examples, the entire lens assembly 62 or at least one lens that is close to the movable support 32 and that is in the lens assembly 62 is capable of moving in the avoidance space. Refer to FIG. 4. The camera module 60 may be in a non-working state. The lens assembly 62 of the camera module 60 may be in a retracted state. When the movable support 32 retracts into the accommodation cavity 31a of the housing 31, the light-transmitting part 321 of the movable support 32 is close to the camera module 60, so that a distance between the light-transmitting part 321 and the camera module 60 is reduced. In some examples, when the movable support 32 is in a retracted position, an outer surface of the light-transmitting part 321 of the movable support 32 may be flush with an outer surface of the housing 31. In this embodiment of this application, the retracted position of the movable support 32 may be an initial position.

In this embodiment of this application, the movable support 32 and the camera module 60 are disposed independently of each other, this means, there is no connection relationship between the movable support 32 and the camera module 60. Therefore, the movable support 32 and the camera module 60 are in a decoupled state. There is no direct connection relationship between the movable support 32 and the camera module 60, and there is no indirect connection relationship between the movable support 32 and the camera module 60 through another mechanical piece. During an entire process in which the movable support 32 extends out of or retracts into the accommodation cavity 31a, the movable support 32 moves relative to the camera module 60, and a position of the camera module 60 remains unchanged. There is no contact between the movable support 32 and the camera module 60, and no force is transmitted. In some examples, there is a distance between any position on the outer surface of the camera module 60 and the movable support 32, so that a gap is formed between the outer surface of the camera module 60 and the movable support 32. Therefore, the camera module 60 and the movable support 32 do not contact with each other in any position.

The electronic device 10 in this embodiment of this application includes the housing assembly 30 and the camera module 60. The housing assembly 30 includes the housing 31 and the movable support 32. The movable support 32 may move relative to the housing 31, so that the movable support 32 is capable of extending out of the accommodation cavity 31a through the avoidance hole 31b to form the avoidance space or retracting into the accommodation cavity 31a. The camera module 60 includes the lens assembly 62. When the camera module 60 is in the working state, and the entire lens assembly 62 or at least one lens close to the movable support 32 needs to extend to perform a focusing action, the movable support 32 extends out of the accommodation cavity 31a of the housing 31, to increase the distance between the light-transmitting part 321 and the camera module 60, and provide the avoidance space for the extended lens assembly 62. In this way, position interference between the light-transmitting part 321 and the lens assembly 62 does not occur. When the camera module 60 is in the non-working state, and the lens assembly 62 is in the retracted state, the movable support 32 retracts into the accommodation cavity 31a of the housing 31, so that the movable support 32 does not protrude from the outer surface of the housing 31. This ensures good flatness on the outer surface of the electronic device 10, and helps improve appearance aesthetics and consistency of the electronic device 10.

In addition, the lens assembly 62 of the camera module 60 has a high requirement on position movement precision in the direction of the optical axis. Therefore, if a position movement error of the lens assembly 62 is large, focusing cannot be performed or focusing is inaccurate. In this embodiment of this application, because the movable support 32 and the camera module 60 are disposed independently of each other, there is no correlation between movement of the movable support 32 and movement of the lens assembly 62 of the camera module 60, and the movement of the movable support 32 and the movement of the camera module 60 do not interfere with each other. Therefore, a position movement error of the movable support 32 is not transferred to the lens assembly 62. Because the movable support 32 only needs to ensure that the light-transmitting part 321 is away from the camera module 60 to release larger space, a position movement precision requirement of the movable support 32 is low. This helps reduce a difficulty and a precision requirement of assembling the movable support 32 and the housing 31.

In addition, because the movable support 32 and the camera module 60 are disposed independently of each other, when a structure of the movable support 32 is damaged and needs to be repaired or replaced, only the movable support 32 and the housing 31 need to be removed, and the camera module 60 does not need to be removed or moved. Therefore, a possibility that a position of the camera module 60 deviates from an original position because the camera module 60 needs to be re-installed and reset can be effectively reduced, and maintenance difficulty and maintenance costs of the electronic device 10 can be reduced.

Refer to FIG. 3 and FIG. 4. In some implementations, the electronic device 10 further includes a driving assembly 70. The driving assembly 70 is disposed in the accommodation cavity 31a of the housing 31. Therefore, the driving assembly 70 is difficult to be observed from the outside of the electronic device 10. This helps improve aesthetics of the electronic device 10. The driving assembly 70 is connected to the housing 31 and the movable support 32. The driving assembly 70 may exert axial force on the movable support 32, to drive the movable support 32 to move relative to the housing 31. The driving assembly 70 has a fastening end and a movable end. The fastening end of the driving assembly 70 is connected to the housing 31. The movable end of the driving assembly 70 is connected to the movable support 32. The driving assembly 70 drives the movable support 32 to move relative to the housing 31 through the movable end. When the driving assembly 70 drives the movable support 32 to move, the movable end of the driving assembly 70 moves in the axial direction X of the avoidance hole 31b, so that the movable end moves relative to the fastening end.

The driving assembly 70 is connected to only the housing 31 and the movable support 32. The driving assembly 70 and the camera module 60 are disposed independently of each other, this means, there is no connection relationship between the driving assembly 70 and the camera module 60. Therefore, the driving assembly 70 and the camera module 60 are in a decoupled state. There is no contact between the driving assembly 70 and the camera module 60, and no force is transmitted. The driving assembly 70 may control, in an electrical control manner, the movable support 32 to extend or retract. This helps implement automatic control of the movable support 32, improves position movement precision of the movable support 32, and ensures synchronization between movement of the movable support 32 and movement of the lens assembly 62 of the camera module 60.

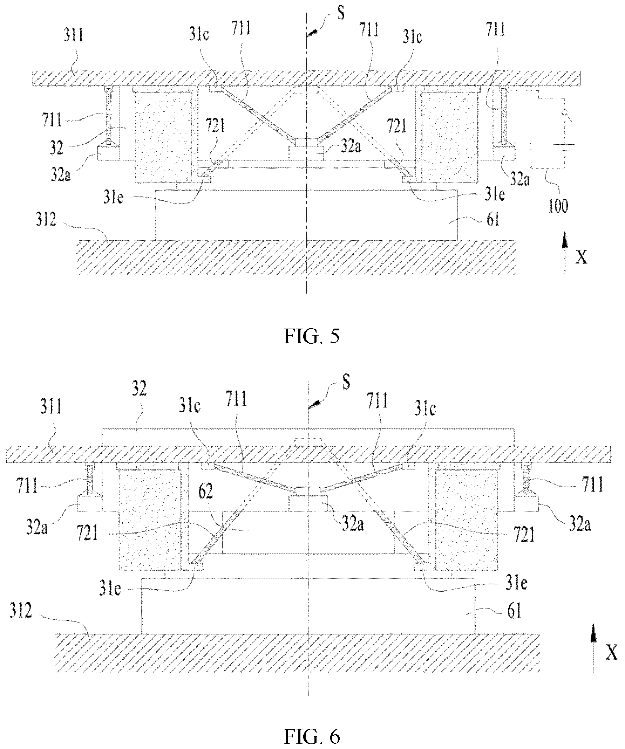

In some implementations, FIG. 5 schematically shows a partial sectional structure of the electronic device 10 according to an embodiment of this application. Refer to FIG. 4 and FIG. 5. The driving assembly 70 includes at least one group of first driving units 71 and at least one group of second driving units 72. The first driving unit 71 and the second driving unit 72 are disposed independently of each other, this means , there is no connection relationship between the first driving unit 71 and the second driving unit 72. The first driving unit 71 and the second driving unit 72 can work independently without movement interference. Driving manners of the first driving unit 71 and the second driving unit 72 may be the same or different. This helps improve flexibility and diversity of driving manner selection, and improves flexibility of a structural design of the first driving unit 71 or the second driving unit 72, to adapt to different installation spaces and application scenarios.

In this embodiment of this application, in the axial direction X of the avoidance hole 3 1b, a fastening end of the first driving unit 71 is located on a side that is of a movable end of the first driving unit 71 and that is close to the avoidance hole 31b. Refer to FIG. 5. The movable support 32 is in a retracted position. FIG. 6 schematically shows a partial sectional structure of the electronic device 10 according to an embodiment of this application. Refer to FIG. 6. The movable support 32 is in an extended position. When the movable support 32 needs to be switched from the retracted position shown in FIG. 5 to the extended position shown in FIG. 6, the first driving unit 71 may drive the movable support 32 to extend out of the accommodation cavity 31a. In the axial direction X of the avoidance hole 31b, a fastening end of the second driving unit 72 is located on a side that is of a movable end of the second driving unit 72 and that is away from the avoidance hole 31b. When the movable support 32 needs to be switched from the extended position shown in FIG. 6 to the retracted position shown in FIG. 5, the second driving unit 72 may drive the movable support 32 to retract into the accommodation cavity 31a.

If the driving assembly 70 drives both the movable support 32 and the camera module 60, because a total weight of the movable support 32 and the camera module 60 is large, the driving assembly 70 needs to bear a large load. Therefore, a size of the driving assembly 70 is designed to be large, and a speed of driving the movable support 32 and the camera module 60 to move is slow. In this embodiment of this application, because the movable support 32 and the camera module 60 are independent of each other, the driving assembly 70 is configured to independently drive the movable support 32 to move. Therefore, a load requirement of the driving assembly 70 is low, and the driving assembly 70 may drive the movable support 32 to move rapidly. This shortens movement adjustment time of the movable support 32, and shortens start-up time of the camera module 60.

Refer to FIG. 5 or FIG. 6. In some implementations, the first driving unit 71 includes a first electrostrictive body 711. When the first electrostrictive body 711 shrinks, the first driving unit 71 exerts force in the axial direction X of the avoidance hole 3 1b on the movable support 32, to drive the movable support 32 to move. For example, the first electrostrictive body 711 has a predetermined length. The first electrostrictive body 711 may shrink in a longitudinal direction of the first electrostrictive body 711. In this embodiment of this application, the first electrostrictive body 711 may be used as a power source, and the first electrostrictive body 711 may shrink, so that the movable end of the first driving unit 71 generates a displacement amount in the axial direction X of the avoidance hole 31b, thereby driving the movable support 32 to move. It should be noted that, the force exerted by the first driving unit 71 on the movable support 32 may not be completely in the axial direction X of the avoidance hole 31b, provided that there is a component of the force that is in the axial direction X and that drives the movable support 32 to move in the avoidance space. The following implementations are similar. Details are not described again.

The electronic device 10 further includes an excitation circuit 100. The first electrostrictive body 711 is electrically connected to the excitation circuit 100. The first electrostrictive body 711 may be controlled by the excitation circuit 100. When the excitation circuit 100 works, an excitation electrical signal may be applied to the first electrostrictive body 711, to enable the first electrostrictive body 711 to shrink. When the excitation circuit 100 is disconnected, the first electrostrictive body 711 may be restored to an initial state.

Because the first electrostrictive body 711 of the first driving unit 71 may be configured to generate power for driving the movable support 32 to move, and a volume of the first electrostrictive body 711 may be designed to be small, an overall structural design of the first driving unit 71 may be more compact, and the entire first driving unit 71 occupies small space. This helps release more space in the accommodation cavity 31a to arrange more mechanical pieces, or helps design the electronic device 10 to be thin and light.

In some implementations, the first electrostrictive body 711 has two opposite end parts. One end of the first electrostrictive body 711 is connected to the housing 31 to form the fastening end, and the other end of the first electrostrictive body 711 is connected to the movable support 32 to form the movable end. In the axial direction X of the avoidance hole 31b, the fastening end is located on a side that is of the movable end and that is close to the avoidance hole 31b. The first electrostrictive body 711 may directly drive the movable support 32 by shrinking of the first electrostrictive body 711. Therefore, an additional transmission structure does not need to be disposed between the first electrostrictive body 711 and the movable support 32. This helps simplify a structural design between the first electrostrictive body 711 and the movable support 32. A transmission chain between the first electrostrictive body 711 and the movable support 32 is short. This helps improve transmission efficiency between the first electrostrictive body 711 and the movable support 32, reduces error accumulation, and improves position movement precision of the movable support 32.

In some examples, the end of the first electrostrictive body 711 is connected to an inner wall that is of the housing 31 and that faces the accommodation cavity 31a, and the other end of the first electrostrictive body 711 is connected to an end part that is of the movable support 32 and that is located in the accommodation cavity 31a and that is away from the housing 31. In this way, a distance between the fastening end and the movable end may be increased, and a length of the first electrostrictive body 711 may be further increased. This helps increase a shrinkage amount of the first electrostrictive body 711 in limited space, and further increases a displacement amount of the movable support 32. The inner wall of the housing 31 is a surface facing the accommodation cavity 31a.

In some examples, as shown in FIG. 6, a connecting piece 31c is disposed on the inner wall that is of the housing 31 and that faces the accommodation cavity 31a. The movable support 32 has a connecting boss 32a. The connecting boss 32a is located on an outer side of the movable support 32. An end of the first electrostrictive body 711 is connected to the connecting piece 31c, and the other end of the first electrostrictive body 711 is connected to the connecting boss 32a. For example, the first electrostrictive body 711 is located on the outer side of the movable support 32.

In some examples, two or more groups of first driving units 71 are disposed at intervals in a circumferential direction of the avoidance hole 31b. The two or more groups of first driving units 71 may jointly exert driving force on the movable support 32. In this way, in one aspect, a load amount requirement of each group of first driving units 71 may be reduced. In another aspect, the two or more groups of first driving units 71 may exert driving force on the movable support 32 in different positions, thereby helping improve force stability of the movable support 32, and reducing a possibility that the movable support 32 is tilted relative to an axis S of the avoidance hole 31b due to force imbalance. For example, a quantity of groups of first driving units 71 may be but is not limited to two, three, or four.

In some examples, the two or more groups of first driving units 71 are evenly distributed in the circumferential direction of the avoidance hole 31b.

In some examples, the first electrostrictive body 711 may extend in the axial direction X of the avoidance hole 31b. Two ends of the first electrostrictive body 711 may be correspondingly disposed in the axial direction X of the avoidance hole 3 1b. An end part that is of the first electrostrictive body 711 and that is connected to the housing 31 is above an end part that is of the first electrostrictive body 711 and that is connected to the movable support 32. For example, each group of first driving units 71 may include at least one first electrostrictive body 711.

In some examples, as shown in FIG. 6, each group of first driving units 71 includes two first electrostrictive bodies 711 that are disposed to intersect each other. For example, projections or extension lines of the projections of the two first electrostrictive bodies 711 intersect on a first plane. It should be noted that the first plane is a plane perpendicular to the axial direction X of the avoidance hole 31b. Alternatively, for example, an included angle between projections or extension lines of the projections of the two first electrostrictive bodies 711 may be 0° on the first plane.

Each first electrostrictive body 711 intersects the axis S of the avoidance hole 31b, so that a shrinkage direction of the first electrostrictive body 711 intersects the axial direction X of the avoidance hole 3 1b. When the first electrostrictive body 711 shrinks, the end part that is of the first electrostrictive body 711 and that is connected to the movable support 32 may generate a displacement component in the axial direction X of the avoidance hole 31b. The two first electrostrictive bodies 711 that are disposed to intersect each other simultaneously exert driving force on the movable support 32. This helps ensure a force balance on the movable support 32, and improves stability of a moving process. For example, the two first electrostrictive bodies 711 are symmetrically disposed relative to the axis S of the avoidance hole 3 1b. For example, a distance between end parts that are of the two first electrostrictive bodies 711 and that are connected to the housing 31 is greater than a distance between end parts that are of the two first electrostrictive bodies 711 and that are connected to the movable support 32.

In this embodiment of this application, a manner in which the first electrostrictive body 711 intersects the axis S of the avoidance hole 31b may increase a distance between the fastening end and the movable end, thereby increasing a length of the first electrostrictive body 711. This helps increase the shrinkage amount of the first electrostrictive body 711 in limited space, and further increases the displacement amount of the movable support 32.

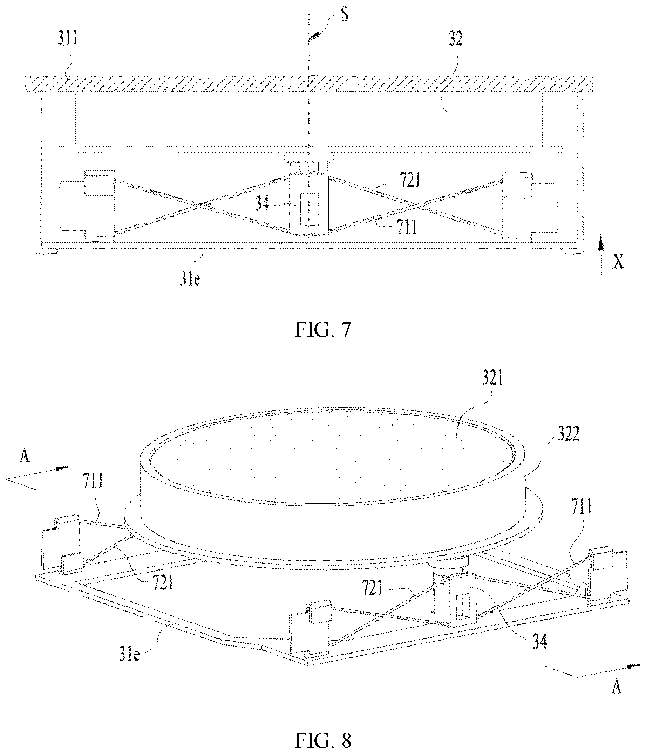

In some examples, FIG. 7 schematically shows a partial sectional structure of the electronic device 10 according to an embodiment. As shown in FIG. 7, two ends of the first electrostrictive body 711 are separately connected to the housing 31. A middle area of the first electrostrictive body 711 is connected to the movable support 32. The two ends of the first electrostrictive body 711 are located on a same side of the middle area of the first electrostrictive body 711. Therefore, the entire first electrostrictive body 711 is of a bending structure. Relative to the middle area of the first electrostrictive body 711, the two ends of the first electrostrictive body 711 are disposed close to the movable support 32. For example, the housing 31 includes an adapter part 31e. The adapter part 31e is located on a side that is of the movable support 32 and that is close to the camera module 60. The two ends of the first electrostrictive body 711 are separately connected to the adapter part 31e. For example, each group of first driving units 71 may include one first electrostrictive body 711.

For example, FIG. 8 is a schematic diagram of a partial structure of the electronic device 10 according to an embodiment. Refer to FIG. 7 and FIG. 8. The housing assembly 30 further includes an adapter 34. The adapter 34 may be disposed on a side that is of the movable support 32 and that faces the camera module. The adapter 34 is connected to the movable support 32 and the driving assembly 70. The driving assembly 70 exerts force in the axial direction X of the avoidance hole 3 1b on the movable support 32 through the adapter 34, to drive the adapter 34 and the movable support 32 to move. The middle area of the first electrostrictive body 711 is located on a side that is of the adapter 34 and that is away from the movable support 32. The middle area of the first electrostrictive body 711 is movably connected to the adapter 34. A predetermined angle exists between two sections that are of the first electrostrictive body 711 and that are located on two sides of the adapter 34. When the first electrostrictive body 711 retracts as a whole, the adapter 34 and the movable support may be driven to move.

For example, the adapter 34 is located on a side that is of the adapter part 31e of the housing 31 and that faces the movable support 32. There is a gap between the adapter 34 and the adapter part 3 1e of the housing 31 in the axial direction of the avoidance hole 31b.

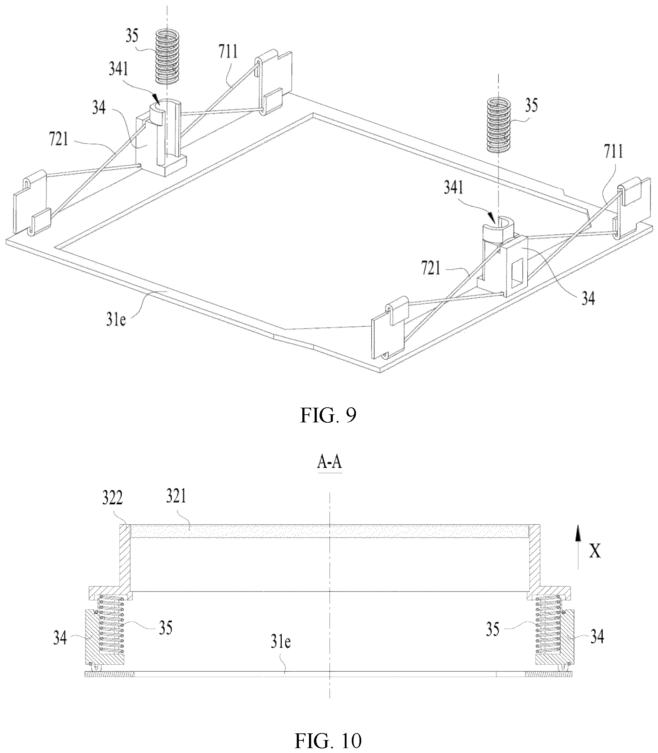

In some examples, FIG. 9 schematically shows a partially exploded structure of the electronic device 10 according to an embodiment. Refer to FIG. 9 and FIG. 10. The adapter 34 is movably connected to the movable support 32 in the axial direction X of the avoidance hole 31b. The housing assembly also includes a cushioning piece 35. The cushioning piece 35 is disposed between the movable support 32 and the adapter 34 and generates abutting force in the axial direction X of the avoidance hole 31b. When the movable support 32 is in an extended state, if the movable support 32 is subject to external force, for example, the electronic device 10 falls and the movable support 32 contacts a bottom surface, the movable support 32 moves a predetermined distance in a retracting direction relative to the adapter 34. In this case, the cushioning piece 35 may exert reverse force on the movable support 32 to implement a cushioning function. This helps reduce a possibility that the movable support 32 is damaged due to external impact on the movable support 32, or helps reduce a possibility that a structure of the driving assembly 70 is damaged because impact force on the movable support 32 is directly transmitted to the driving assembly 70. After the impact force disappears, the cushioning piece 35 may push the movable support 32 back to an extended position. For example, the cushioning piece 35 is in a state in which the movable support 32 and the adapter 34 press each other, or the cushioning piece 35 is in an original length state. For example, one end of the cushioning piece 35 is connected to the movable support 32, and the other end of the cushioning piece 35 is connected to the adapter 34. For example, as shown in FIG. 10, the adapter 34 has an accommodation space 341. The cushioning piece 35 is disposed in the accommodation space 341. For example, the adapter 34 may be of a columnar structure, and the cushioning piece 35 may be a spring.

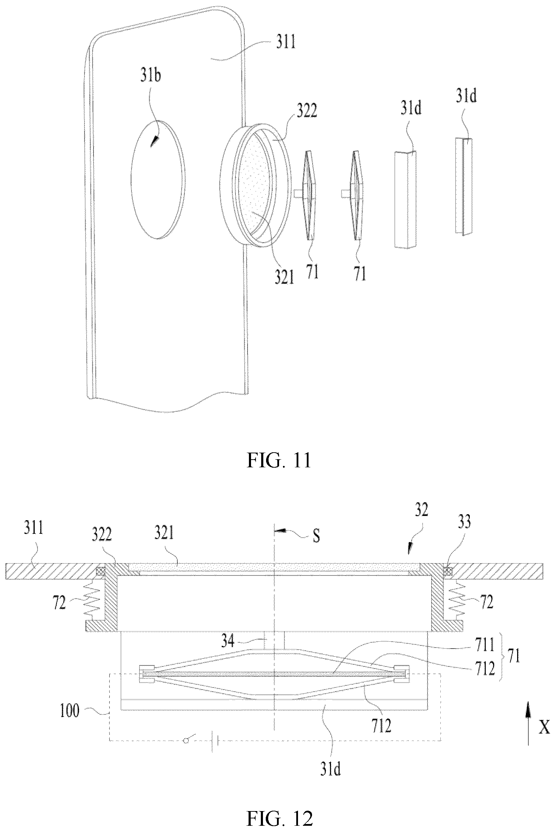

In some implementations, FIG. 11 schematically shows a partially exploded structure of the electronic device 10 according to an embodiment of this application. FIG. 12 schematically shows a partial sectional structure of the electronic device 10 including the movable support 32 in a retracted position according to an embodiment of this application. Refer to FIG. 11 and FIG. 12. The first driving unit 71 further includes a first actuating piece 712. The first actuating piece 712 has a predetermined length. A longitudinal direction of the first actuating piece 712 may be disposed to intersect the axis S of the avoidance hole 31b. Two ends of the first actuating piece 712 may have a degree of freedom of movement relative to the housing 31. In some examples, an end part of the first actuating piece 712 may be slidably connected to the housing 31. For example, the movable support 32 is connected to a middle area of the first actuating piece 712.

The first electrostrictive body 711 intersects the axial direction X of the avoidance hole 31b. Therefore, a shrinkage direction of the first electrostrictive body 711 intersects the axial direction X of the avoidance hole 31b. Two ends of the first electrostrictive body 711 may be respectively connected to two ends of the first actuating piece 712. In some examples, an end part of the first electrostrictive body 711 may be soldered, bonded, or riveted to an end part of the first actuating piece 712. Alternatively, an end part of the first actuating piece 712 may clamp an end part of the first electrostrictive body 711.

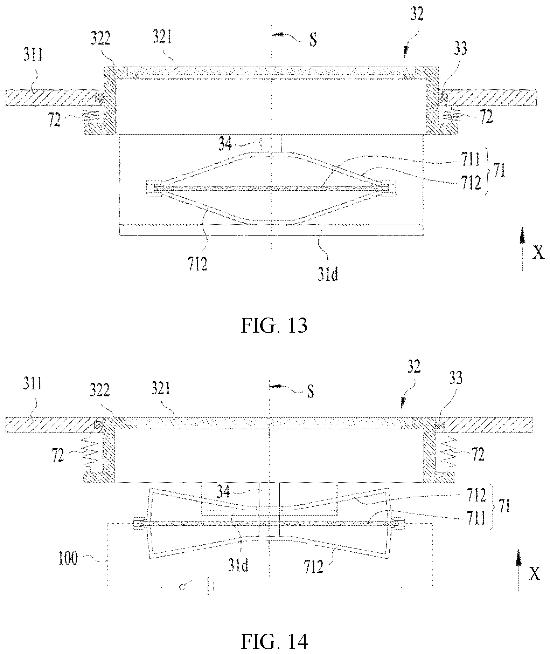

FIG. 13 schematically shows a partial sectional structure of the electronic device 10 including the movable support 32 in an extended position according to an embodiment of this application. As shown in FIG. 13, after the first electrostrictive body 711 shrinks, the first electrostrictive body 711 may drive the two ends of the first actuating piece 712 to approach each other, so that the first actuating piece 712 connected to the movable support 32 bulges in the axial direction X of the avoidance hole 31b, to drive the movable support 32 to move. The middle area of the first actuating piece 712 bulges to a large extent. Therefore, the movable support 32 may be driven to generate a large displacement amount.

In some examples, a shrinkage direction of the first electrostrictive body 711 is perpendicular to the axial direction X of the avoidance hole 31b.

In some examples, as shown in FIG. 12 and FIG. 13, in the axial direction X of the avoidance hole 31b, the first actuating piece 712 is disposed on each of two sides of the first electrostrictive body 711. When the first electrostrictive body 711 shrinks, the first electrostrictive body 711 may simultaneously drive first actuating pieces 712 on the two sides of the first electrostrictive body 711 to bulge. In this embodiment of this application, the shrinkage amount of the first electrostrictive body 711 may be amplified by using the first actuating pieces 712 on the two sides of the first electrostrictive body 711, so that a displacement amount of the movable support 32 is greater than the shrinkage amount of the first electrostrictive body 711. Therefore, the movable support 32 may be driven obtain a large displacement amount by using the first electrostrictive body 711 with a shorter length. In some examples, more than two first electrostrictive bodies 711 may be disposed between the first actuating pieces 712 on the two sides of the first electrostrictive bodies 711. This helps improve a bearing capacity of the first driving unit 71, and reduces a possibility that the first electrostrictive body 711 is broken due to an excessively large load.

In some examples, as shown in FIG. 12, the first actuating piece 712 protrudes in a direction away from the first electrostrictive body 711. The housing 31 includes a first limiting part 31d. In the axial direction X of the avoidance hole 31b, the first driving unit 71 may be located between the movable support 32 and the first limiting part 31d. A first actuating piece 712 away from the movable support 32 is connected to the first limiting part 31d, so that the first limiting part 31d may limit and restrict the first actuating piece 712 away from the movable support 32. The movable support 32 is connected to a first actuating piece 712 close to the movable support 32. In this embodiment of this application, when the first electrostrictive body 711 shrinks, each of the first actuating pieces 712 on the two sides of the first electrostrictive body 711 bulges in a direction away from the first electrostrictive body 711. In this case, a displacement amount of the movable support 32 may be equal to a sum of bulge amounts of the first actuating pieces 712 on the two sides of the first electrostrictive body 711.

In some examples, FIG. 14 schematically shows a partial sectional structure of the electronic device 10 according to an embodiment of this application. Refer to FIG. 14. The first actuating piece 712 protrudes in a direction close to the first electrostrictive body 711. The housing 31 includes a first limiting part 31d. A first actuating piece 712 close to the movable support 32 is connected to the first limiting part 31d, so that the first limiting part 31d may restrict and limit the first actuating piece 712 close to the movable support 32. The movable support 32 is connected to a first actuating piece 712 away from the movable support 32. In this embodiment of this application, when the first electrostrictive body 711 shrinks, each of the first actuating pieces 712 on the two sides of the first electrostrictive body 711 bulges in a direction close to the first electrostrictive body 711. In this case, a displacement amount of the movable support 32 may be equal to a sum of bulge amounts of the first actuating pieces 712 on the two sides of the first electrostrictive body 711.

In some examples, as shown in FIG. 13 or FIG. 14, the first actuating piece 712 may be a spring plate. The first actuating piece 712 is elastic. When the first actuating piece 712 bulges in a direction toward the movable support 32, the first actuating piece 712 may accumulate elastic potential energy. When the first electrostrictive body 711 is powered off, and the movable support 32 is retracted, the first actuating piece 712 may release the elastic potential energy, to exert auxiliary force on the movable support 32 during a retracting process. For example, the first actuating piece 712 may be a bent spring plate, and the first actuating piece 712 is prone to bulge when subject to force in this case. The first actuating piece 712 connected to the movable support 32 may protrude toward the movable support 32. For example, the first actuating pieces 712 on the two sides of the first electrostrictive body 711 may be disposed independently. Alternatively, the first actuating pieces 712 on the two sides of the first electrostrictive body 711 may be of an integrally formed structure.

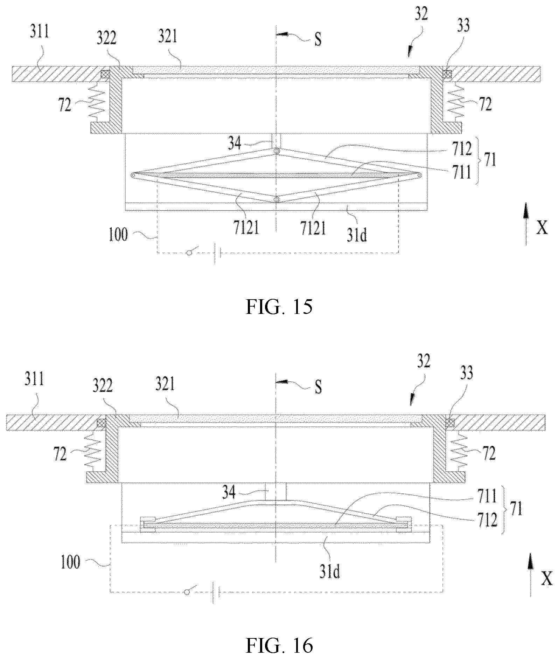

In some examples, FIG. 15 schematically shows a partial sectional structure of the electronic device 10 according to an embodiment of this application. Refer to FIG. 15. The first actuating piece 712 includes two first rod pieces 7121. One first rod piece 7121 is rotatably connected to the other first rod piece 7121. End parts of the two first rod pieces 7121 may be rotatably connected through a rotating shaft. The movable support 32 may be connected to the rotating shaft. The first actuating piece 712 connected to the movable support 32 protrudes toward the movable support 32. In some examples, connection positions of the two first rod pieces 7121 may be located on a side that is of the first electrostrictive body 711 and that faces the movable support 32. When the first electrostrictive body 711 shrinks, the two first rod pieces 7121 approach each other, and the first actuating piece 712 bulges. The connecting positions of the two first rod pieces 7121 are moved toward the movable support 32, to drive the movable support 32 to move. The first rod piece 7121 has good rigidity. The first actuating piece 712 uses a rod structure that is not easily deformed. This helps increase a load of the first actuating piece 712, and reduces a possibility of a deviation between a displacement amount of the movable support 32 when the first actuating piece 712 is not accidentally deformed and a displacement amount of the movable support 32 when the first actuating piece 712 is accidentally deformed.

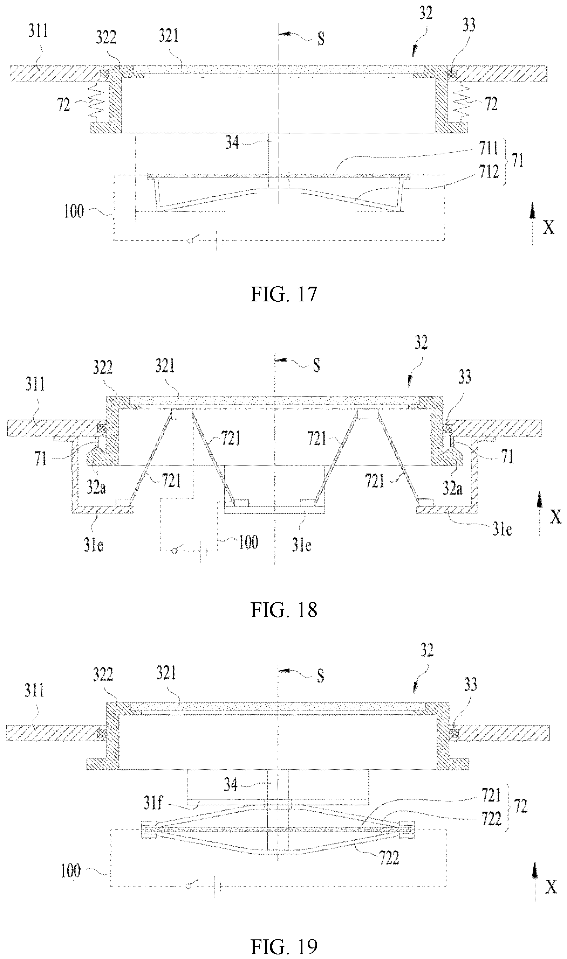

In some examples, FIG. 16 schematically shows a partial sectional structure of the electronic device 10 according to an embodiment of this application. As shown in FIG. 16, the first actuating piece 712 is disposed on a side that is of the first electrostrictive body 711 and that faces the movable support 32. The first actuating piece 712 protrudes away from the first electrostrictive body 711. In some other examples, FIG. 17 schematically shows a partial sectional structure of the electronic device 10 according to an embodiment of this application. As shown in FIG. 17, the first actuating piece 712 is disposed on a side that is of the first electrostrictive body 711 and that is away from the movable support 32. The first actuating piece 712 protrudes toward the first electrostrictive body 711.

In some examples, as shown in FIG. 17, the housing assembly 30 further includes an adapter 34. One end of the adapter 34 in this embodiment is connected to the movable support 32, and the other end of the adapter 34 is connected to the first actuating piece 712. In a manner in which the adapter 34 is used as a transmission piece, the first driving unit 71 may be disposed in a position far away from the movable support 32, to reduce a difficulty in arranging the first driving unit 71 and a possibility of position interference with another mechanical piece.

In some implementations, the first electrostrictive body 711 may be a shape memory alloy body. For example, the first electrostrictive body 711 may be but is not limited to a shape memory alloy wire. For example, when the first electrostrictive body 711 is powered on, a temperature of the first electrostrictive body 711 increases, and the first electrostrictive body 711 shrinks due to an increase of the temperature.

In some implementations, the first electrostrictive body 711 may be a piezoelectric telescopic body. For example, the first electrostrictive body 711 may include but is not limited to a plurality of piezoelectric ceramic elements. The plurality of piezoelectric ceramic elements are stacked in a thickness direction of the piezoelectric ceramic element. A shrinkage direction of the first electrostrictive body 711 is parallel to the thickness direction of the piezoelectric ceramic element.

In some implementations, FIG. 18 schematically shows a partial sectional structure of the electronic device 10 according to an embodiment of this application. As shown in FIG. 18, the second driving unit 72 is configured to drive the movable support 32 in an extended state to perform a retracting movement. The second driving unit 72 includes a second electrostrictive body 721. When the second electrostrictive body 721 shrinks, the second driving unit 72 exerts force in the axial direction X of the avoidance hole 31b on the movable support 32, to drive the movable support 32 to move. For example, the second electrostrictive body 721 has a predetermined length. The second electrostrictive body 721 may shrink in a longitudinal direction of the second electrostrictive body 721. In this embodiment of this application, the second electrostrictive body 721 may be used as a power source, and the second electrostrictive body 721 may shrink, so that the movable end of the second driving unit 72 generates a displacement amount in the axial direction X of the avoidance hole 31b, thereby driving the movable support 32 to move.

The electronic device 10 further includes an excitation circuit 100. The second electrostrictive body 721 is electrically connected to the excitation circuit 100. The second electrostrictive body 721 may be controlled by the excitation circuit 100. When the excitation circuit 100 works, an excitation electrical signal may be applied to the second electrostrictive body 721, to enable the second electrostrictive body 721 to shrink. When the excitation circuit 100 is disconnected, the second electrostrictive body 721 may be restored to an initial state. For example, when the first electrostrictive body 711 is in a power-on state, the second electrostrictive body 721 is in a power-off state. Correspondingly, when the second electrostrictive body 721 is in a power-on state, the first electrostrictive body 711 is in a power-off state.

Because the second electrostrictive body 721 of the second driving unit 72 may be configured to generate power for driving the movable support 32 to move, and a volume of the second electrostrictive body 721 may be designed to be small, an overall structural design of the second driving unit 72 may be more compact, and the entire second driving unit 72 occupies small space. This helps release more space in the accommodation cavity 31a to arrange more mechanical pieces, or helps design the electronic device 10 to be thin and light.

Refer to FIG. 18. In some implementations, the second electrostrictive body 721 has two opposite end parts. One end of the second electrostrictive body 721 is connected to the housing 31 to form the fastening end, and the other end of the second electrostrictive body 721 is connected to the movable support 32 to form the movable end. In the axial direction X of the avoidance hole 31b, the fastening end is located on the side that is of the movable end and that is away from the avoidance hole 31b. The second electrostrictive body 721 may directly drive the movable support 32 by shrinking of the second electrostrictive body 721. Therefore, an additional transmission structure does not need to be disposed between the second electrostrictive body 721 and the movable support 32. This helps simplify a structural design between the second electrostrictive body 721 and the movable support 32. A transmission chain between the second electrostrictive body 721 and the movable support 32 is short. This helps improve transmission efficiency between the second electrostrictive body 721 and the movable support 32. In addition, this helps reduce error accumulation, and improves position movement precision of the movable support 32.

In some examples, the housing 31 includes an adapter part 31e. The adapter part 31e is located on a side that is of the movable support 32 and that is close to the camera module 60. One end of the second electrostrictive body 721 is connected to the adapter part 31e, and the other end of the second electrostrictive body 721 is connected to an end part that is of the movable support 32 and that is away from the camera module 60. This helps increase a length of the second electrostrictive body 721. In this way, when the second electrostrictive body 721 shrinks, a large shrinkage amount may be obtained, and the movable support 32 may obtain a large amount of displacement. For example, one end of the second electrostrictive body 721 is connected to an area that is on the movable support 32 and that is close to the light-transmitting part 321.

In some examples, two or more groups of second driving units 72 are disposed at intervals in the circumferential direction of the avoidance hole 31b. The two or more groups of second driving units 72 may jointly exert driving force on the movable support 32. In this way, in one aspect, a load amount requirement of each group of second driving units 72 may be reduced. In another aspect, the two or more groups of the second driving units 72 may exert driving force on the movable support 32 in different positions, thereby helping improve force stability of the movable support 32, and reducing a possibility that the movable support 32 is tilted relative to the axis S of the avoidance hole 31b due to force imbalance. For example, a quantity of groups of second driving units 72 may be but is not limited to two, three, or four.

In some examples, the two or more groups of second driving units 72 are evenly distributed in the circumferential direction of the avoidance hole 31b.

In some examples, the second electrostrictive body 721 may extend in the axial direction X of the avoidance hole 31b. Two ends of the second electrostrictive body 721 may be correspondingly disposed in the axial direction X of the avoidance hole 3 1b. An end part that is of the second electrostrictive body 721 and that is connected to the housing 31 is below an end part that is of the second electrostrictive body 721 and that is connected to the movable support 32. For example, each group of second driving units 72 may include at least one second electrostrictive body 721.

In some examples, as shown in FIG. 18, each group of second driving units 72 includes two second electrostrictive bodies 721 that are disposed to intersect each other. For example, projections or extension lines of the projections of the two second electrostrictive bodies 721 intersect on the first plane. It should be noted that the first plane is the plane perpendicular to the axial direction X of the avoidance hole 31b. Alternatively, for example, an included angle between projections or extension lines of the projections of the two second electrostrictive bodies 721 may be 0° on the first plane.

Each second electrostrictive body 721 intersects the axial direction X of the avoidance hole 31b. Therefore, a shrinkage direction of the second electrostrictive body 721 intersects the axial direction X of the avoidance hole 31b. When the second electrostrictive body 721 shrinks, the end part that is of the second electrostrictive body 721 and that is connected to the movable support 32 may generate a displacement component in the axial direction X of the avoidance hole 31b. The two second electrostrictive bodies 721 that are disposed to intersect each other simultaneously exert driving force on the movable support 32. This helps ensure a force balance on the movable support 32, and improves stability of a moving process. For example, the two second electrostrictive bodies 721 are symmetrically disposed relative to the axis S of the avoidance hole 31b. For example, a distance between end parts that are of the two second electrostrictive bodies 721 and that are connected to the housing 31 is greater than a distance between end parts that are of the two second electrostrictive bodies 721 and that are connected to the movable support 32.

In this embodiment of this application, a manner in which the second electrostrictive body 721 intersects the axis S of the avoidance hole 31b may increase a distance between the fastening end and the movable end, thereby increasing a length of the second electrostrictive body 721. This helps increase the shrinkage amount of the second electrostrictive body 721 in limited space, and further increases the displacement amount of the movable support 32.

In some examples, the first driving unit 71 and the second driving unit 72 may be alternately disposed in the circumferential direction of the avoidance hole 31b.

Refer to FIG. 7. In some examples, two ends of the second electrostrictive body 721 are separately connected to the housing 31. The middle area of the second electrostrictive body 721 is connected to the movable support 32. The two ends of the second electrostrictive body 721 are located on a same side of the middle area of the second electrostrictive body 721. Therefore, the entire second electrostrictive body 721 is of a bending structure. Relative to the middle area of the second electrostrictive body 721, the two ends of the second electrostrictive body 721 are disposed away from the movable support 32. For example, each group of first driving units 71 may include one second electrostrictive body 721.

For example, as shown in FIG. 8, the housing assembly 30 further includes an adapter 34. The adapter 34 is connected to the movable support 32 and the driving assembly 70. The driving assembly 70 exerts force in the axial direction X of the avoidance hole 3 1b on the movable support 32 through the adapter 34, to drive the adapter 34 and the movable support 32 to move. The middle area of the second electrostrictive body 721 is located on a side that is of the adapter 34 and that is close to the movable support 32. The middle area of the second electrostrictive body 721 is movably connected to the adapter 34. A predetermined angle exists between two sections that are of the second electrostrictive body 721 and that are located on two sides of the adapter 34. When the second electrostrictive body 721 retracts as a whole, the adapter 34 and the movable support 32 may be driven to move.

In some examples, as shown in FIG. 8, the first electrostrictive body 711 and the second electrostrictive body 721 are separately connected to a same adapter 34. Relative to an end part of the second electrostrictive body 721, an end part of the first electrostrictive body 711 is disposed close to the movable support 32. Relative to the middle area of the second electrostrictive body 721, the middle area of the first electrostrictive body 711 is disposed away from the movable support 32.

In some implementations, FIG. 19 schematically shows a partial sectional structure of the electronic device 10 including the movable support 32 in an extended position according to an embodiment of this application. Refer to FIG. 19. The second driving unit 72 further includes a second actuating piece 722. The second actuating piece 722 has a predetermined length. A longitudinal direction of the second actuating piece 722 may be disposed to intersect the axis S of the avoidance hole 3 1b. Two ends of the second actuating piece 722 may have a degree of freedom of movement relative to the housing 31. In some examples, an end part of the second actuating piece 722 may be slidably connected to the housing 31. In some examples, the movable support 32 is connected to a middle area of the second actuating piece 722.

The second electrostrictive body 721 intersects the axis S of the avoidance hole 31b, so that a shrinkage direction of the second electrostrictive body 721 intersects the axial direction X of the avoidance hole 31b. Two ends of the second electrostrictive body 721 may be respectively connected to two ends of the second actuating piece 722. In some examples, an end part of the second electrostrictive body 721 may be soldered, bonded, or riveted to an end part of the second actuating piece 722. Alternatively, an end part of the second actuating piece 722 may clamp an end part of the second electrostrictive body 721.

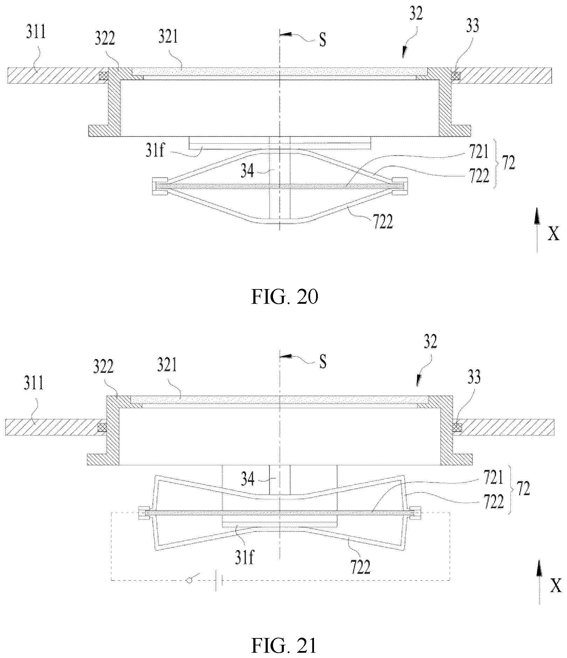

FIG. 20 schematically shows a partial sectional structure of the electronic device 10 including the movable support 32 in a retracted position according to an embodiment of this application. As shown in FIG. 20, after the second electrostrictive body 721 shrinks, the second electrostrictive body 721 may drive the two ends of the second actuating piece 722 to approach each other, so that the second actuating piece 722 connected to the movable support 32 bulges in the axial direction X of the avoidance hole 31b, to drive the movable support 32 to retract. The middle area of the second actuating piece 722 bulges to a large extent. Therefore, the movable support 32 may be driven to generate a large displacement amount.

In some examples, a shrinkage direction of the second electrostrictive body 721 is perpendicular to the axial direction X of the avoidance hole 31b.

In some examples, as shown in FIG. 19 and FIG. 20, in the axial direction X of the avoidance hole 3 1b, the second actuating piece 722 is disposed on each of two sides of the second electrostrictive body 721. When the second electrostrictive body 721 shrinks, the second electrostrictive body 721 may simultaneously drive second actuating pieces 722 on the two sides of the second electrostrictive body 721 to bulge. A shrinkage amount of the second electrostrictive body 721 may be amplified by using the second actuating pieces 722 on the two sides of the second electrostrictive body 721, so that a displacement amount of the movable support 32 is greater than the shrinkage amount of the second electrostrictive body 721. Therefore, the movable support 32 may be driven to obtain a large displacement amount by using the second electrostrictive body 721 with a shorter length. In some examples, more than two second electrostrictive bodies 721 may be disposed between the second actuating pieces 722 on the two sides of second electrostrictive bodies 721. This helps improve a bearing capacity of the second driving unit 72, and reduces a possibility that the second electrostrictive body 721 is broken due to an excessively large load.

In some examples, as shown in FIG. 20, the second actuating piece 722 protrudes in a direction away from the second electrostrictive body 721. The housing 31 includes a second limiting part 3 1f. In the axial direction X of the avoidance hole 31b, the second limiting part 31f may be located between the movable support 32 and the second driving unit 72. A second actuating piece 722 close to the movable support 32 is connected to the second limiting part 31f, so that the second limiting part 31f may limit and restrict the second actuating piece 722 close to the movable support 32. The movable support 32 is connected to a second actuating piece 722 away from the movable support 32. In this embodiment of this application, when the second electrostrictive body 721 shrinks, each of the second actuating pieces 722 on the two sides of the second electrostrictive body 721 bulges in the direction away from the second electrostrictive body 721. In this case, a displacement amount of the movable support 32 may be equal to a sum of bulge amounts of the second actuating pieces 722 on the two sides of the second electrostrictive body 721.

In some examples, FIG. 21 schematically shows a partial sectional structure of the electronic device 10 according to an embodiment of this application. Refer to FIG. 21. The second actuating piece 722 protrudes in a direction close to the second electrostrictive body 721. The housing 31 includes a second limiting part 31f. A second actuating piece 722 away from the movable support 32 is connected to the second limiting part 31f, so that the second limiting part 31f may restrict and limit the second actuating piece 722 away from the movable support 32. The movable support 32 is connected to a second actuating piece 722 close to the movable support 32. In this embodiment of this application, when the second electrostrictive body 721 shrinks, each of the second actuating pieces 722 on the two sides of the second electrostrictive body 721 bulges in the direction close to the second electrostrictive body 721. In this case, a displacement amount of the movable support 32 may be equal to a sum of bulge amounts of the second actuating pieces 722 on the two sides of the second electrostrictive body 721.

In some examples, as shown in FIG. 19 or FIG. 21, the second actuating piece 722 may be a spring plate. The second actuating piece 722 is elastic. When the second actuating piece 722 bulges in a direction away from the movable support 32, the second actuating piece 722 may accumulate elastic potential energy. When the second electrostrictive body 721 is powered off, and the movable support 32 is extended, the second actuating piece 722 may release the elastic potential energy, to exert auxiliary force on the movable support 32 during an extending process. For example, the second actuating piece 722 may be a bent spring plate, and the second actuating piece 722 is prone to bulge when subject to force in this case. The second actuating piece 722 connected to the movable support 32 protrudes in a direction away from the movable support 32. For example, the second actuating pieces 722 on the two sides of the second electrostrictive body 721 may be independently disposed. Alternatively, the second actuating pieces 722 on the two sides of the second electrostrictive body 721 may be of an integrally formed structure.

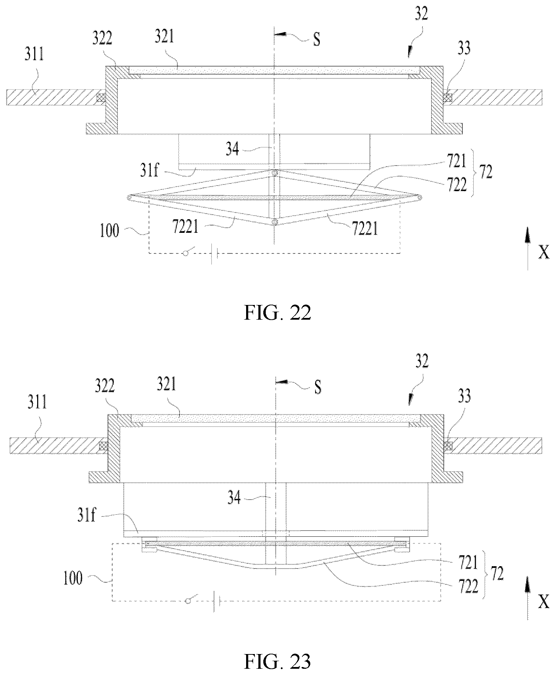

In some examples, FIG. 22 schematically shows a partial sectional structure of the electronic device 10 according to an embodiment of this application. Refer to FIG. 22. The second actuating piece 722 includes two second rod pieces 7221. One second rod piece 7221 is rotatably connected to the other second rod piece 7221. End parts of the two second rod pieces 7221 may be rotatably connected through a rotating shaft. The movable support 32 may be connected to the rotating shaft. The second actuating piece 722 connected to the movable support 32 protrudes toward the movable support 32. In some examples, connection positions of the two second rod pieces 7221 may be located on a side that is of the second electrostrictive body 721 and that faces the movable support 32. When the second electrostrictive body 721 shrinks, the two second rod pieces 7221 approach each other, and the second actuating piece 722 bulges. The connecting positions of the two second rod pieces 7221 are moved toward the movable support 32, to drive the movable support 32 to move. The second rod piece 7221 has good rigidity. The second actuating piece 722 uses a rod structure that is not easily deformed. This helps increase a load of the second actuating piece 722, and reduces a possibility of a deviation between a displacement amount of the movable support 32 when the second actuating piece 722 is not accidentally deformed and a displacement amount of the movable support 32 when the second actuating piece 722 is accidentally deformed.

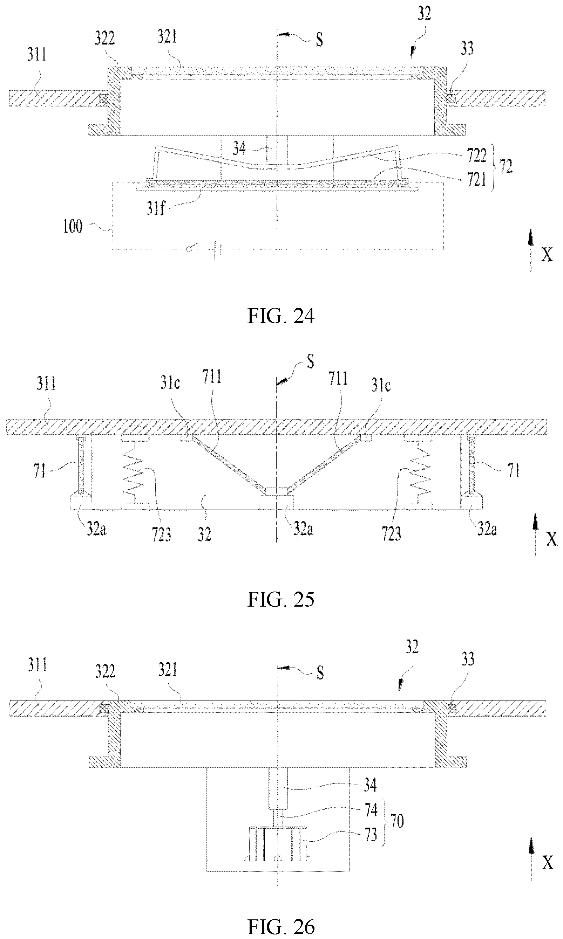

In some examples, FIG. 23 schematically shows a partial sectional structure of the electronic device 10 according to an embodiment of this application. As shown in FIG. 23, the second actuating piece 722 is disposed on a side that is of the second electrostrictive body 721 and that is away from the movable support 32. The second actuating piece 722 protrudes away from the second electrostrictive body 721. In some other examples, FIG. 24 schematically shows a partial sectional structure of the electronic device 10 according to an embodiment of this application. As shown in FIG. 24, the second actuating piece 722 is disposed on a side that is of the second electrostrictive body 721 and that faces the movable support 32. The second actuating piece 722 protrudes toward the second electrostrictive body 721.

In some examples, the housing assembly 30 further includes an adapter 34. One end of the adapter 34 in this embodiment is connected to the movable support 32, and the other end of the adapter 34 is connected to the first actuating piece 712. In a manner in which the adapter 34 is used as a transmission piece, the second driving unit 72 may be disposed in a position far away from the movable support 32, to reduce a difficulty in arranging the second driving unit 72 and a possibility of position interference with another mechanical piece. In some implementations, the second electrostrictive body 721 may be a shape memory alloy body. For example, the second electrostrictive body 721 may be but is not limited to a shape memory alloy wire. For example, when the second electrostrictive body 721 is powered on, a temperature of the second electrostrictive body 721 increases, and the second electrostrictive body 721 shrinks due to an increase of the temperature.

In some implementations, the second electrostrictive body 721 may be a piezoelectric telescopic body. For example, the second electrostrictive body 721 may include but is not limited to a plurality of piezoelectric ceramic elements. The plurality of piezoelectric ceramic elements are stacked in a thickness direction of the piezoelectric ceramic element. A shrinkage direction of the second electrostrictive body 721 is parallel to the thickness direction of the piezoelectric ceramic element.

In some implementations, FIG. 25 schematically shows a partial sectional structure of the electronic device 10 according to an embodiment of this application. Refer to FIG. 25. The second driving unit 72 includes an elastic piece 723. One end of the elastic piece 723 is connected to the housing 31, and the other end of the elastic piece 723 is connected to the movable support 32. When the first driving unit 71 drives the movable support 32 to extend out of the accommodation cavity 31a, the elastic piece 723 accumulates energy. When the first driving unit 71 stops driving the movable support 32, the elastic piece 723 releases the energy, to drive the movable support 32 to retract into the accommodation cavity 31a. In some examples, when the first driving unit 71 drives the movable support 32 to extend out of the accommodation cavity 31a, the elastic piece 723 compresses and is deformed to accumulate energy. In some examples, the elastic piece 723 may be, but is not limited to, a spring.

In some implementations, FIG. 26 schematically shows a partial sectional structure of the electronic device 10 according to an embodiment of this application. Refer to FIG. 26. The driving assembly 70 may include a motor 73 and a transmission rod 74. One of the motor 73 and the transmission rod 74 is connected to the housing 31, and the other is connected to the movable support 32. The motor 73 drives the transmission rod 74 to move in the axial direction X of the avoidance hole 3 1b, to drive the movable support 32 to move. The driving assembly 70 may drive the movable support 32 to extend or retract. A driving manner in which the motor 73 and the transmission rod 74 are used helps improve a bearing capacity of the driving assembly 70, to adapt to a scenario in which the movable support 32 is heavy.

In some examples, as shown in FIG. 26, the transmission rod 74 may be threadedly connected to the adapter 34. The motor 73 may drive the transmission rod 74 to rotate, to drive the adapter 34 and the movable support 32 to move. For example, the motor 73 may be a stepper motor or a servo motor.

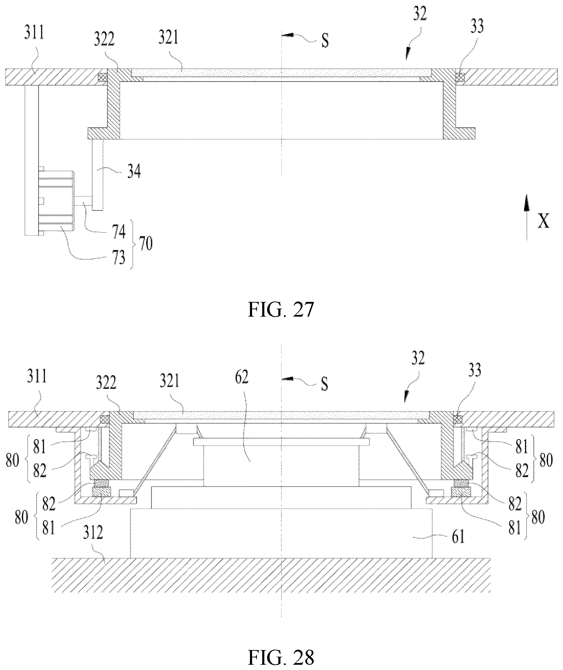

In some examples, FIG. 27 schematically shows a partial sectional structure of the electronic device 10 according to an embodiment of this application. As shown in FIG. 27, the transmission rod 74 may be connected to the adapter 34 through tooth meshing. The transmission rod 74 and the adapter 34 may each have meshing teeth. For example, the transmission rod 74 has gears, and the adapter 34 has racks. Alternatively, a transmission mode of the transmission rod 74 and the adapter 34 is worm gear-to-worm transmission. The motor 73 may drive the transmission rod 74 to rotate, to drive the adapter 34 and the movable support 32 to move. For example, the motor 73 may be a stepper motor or a servo motor.

In some examples, the electronic device 10 further includes a locking mechanism. The locking mechanism is configured to lock the motor 73, so that the movable support 32 stays in a current position. When the motor 73 is powered off, the locking mechanism locks the motor 73, so that the transmission rod 74 does not rotate in an opposite direction, to ensure that the movable support 32 stays in the current position stably. For example, the locking mechanism includes a locking gear disposed inside the motor 73.

Refer to FIG. 27. In some possible implementations, the movable support 32 further includes an annular part 322. The annular part 322 of the movable support 32 is movably connected to the housing 31. The light-transmitting part 321 is disposed at an end part that is of the annular part 322 and that is away from the camera module 60. The light-transmitting part 321 may be, but is not limited to, a light-transmitting cover plate.

In some examples, a central hole of the annular part 322 has two opposing openings in the axial direction X of the avoidance hole 31b. The light-transmitting part 321 may be disposed close to an opening that is of the central hole and that faces the outside environment, or may be disposed to cover the opening that is of the central hole and that faces the outside environment. An opening that is of the central hole and that is away from the light-transmitting part 321 may be located in the accommodation cavity 31a of the housing 31. At least a part of the camera module 60 may be located in the central hole. The camera module 60 may receive light transmitted from the light-transmitting part 321. In some examples, when the movable support 32 is in an extended position, a part of the camera module 60 is located in the central hole, that is, the camera module 60 does not completely retract from the movable support 32. When the movable support 32 is in a retracted position, the entire camera module 60 or a part of the camera module 60 may be located in the central hole.

In some examples, the light-transmitting part 321 and the annular part 322 are sealed and connected. For example, the light-transmitting part 321 and the annular part 322 may be sealed by using a sealant. In some examples, a material of the light-transmitting part 321 may be, but is not limited to, glass or plastic.

In some examples, the first driving unit 71 includes a first electrostrictive body 711. One end of the first electrostrictive body 711 is connected to one end that is of the annular part 322 and that is close to the camera module 60. The second driving unit 72 includes a second electrostrictive body 721. One end of the second electrostrictive body 721 is located in the annular part 322, and is connected to an end part that is of the annular part 322 and that is away from the camera module 60. A distance between the adapter part 31e of the housing 31 and the end part that is of the annular part 322 and that is away from the camera module 60 is large. This helps increase a length of the second electrostrictive body 721, increases a shrinkage amount of the second electrostrictive body 721, and increases a displacement amount of the movable support 32.

The first driving unit 71 includes a first actuating piece 712. The first actuating piece 712 is located on one side of the annular part 322. The first actuating piece 712 may be connected to an end face that is of the annular part 322 and that faces the camera module 60. For example, the adapter 34 is connected to the first actuating piece 712 and the end face that is of the annular part 322 and that faces the camera module 60. The second driving unit 72 includes a second actuating piece 722. The second actuating piece 722 is located on one side of the annular part 322. The second actuating piece 722 may be connected to the end face that is of the annular part 322 and that faces the camera module 60. For example, the adapter 34 is connected to the second actuating piece 722 and the end face that is of the annular part 322 and that faces the camera module 60.

Refer to FIG. 27. In some implementations, the housing assembly 30 further includes a flexible sealing piece 33. The flexible sealing piece 33 is disposed between the housing 31 and the movable support 32. The flexible sealing piece 33 seals the housing 31 and the movable support 32, to reduce a possibility that water, dust, or sundries enters the inside of the electronic device 10 from a position between the housing 31 and the movable support 32. In some examples, the flexible sealing piece 33 may be of an annular structure. In some examples, a material of the flexible sealing piece 33 may be, but is not limited to, rubber or silicon gel. In some examples, the flexible sealing piece 33 is sleeved around a periphery of the annular part 322.

In some implementations, the housing 31 includes a rear cover 311 and a middle frame 312. The rear cover 311 and the middle frame 312 form the accommodation cavity 31a. The avoidance hole 31b is disposed on the rear cover 311. The movable support 32 is movably connected to the rear cover 311. The driving assembly 70 is connected to the rear cover 311 and the movable support 32. The camera module 60 may be fixedly disposed in the middle frame 312. The rear cover 311 may be a battery cover of the electronic device 10. When using the electronic device 10, a user may touch an outer surface of the rear cover 311 with a hand of the user.

In some implementations, FIG. 28 schematically shows a partial sectional structure of the electronic device 10 according to an embodiment of this application. Refer to FIG. 28. The electronic device 10 further includes a locking assembly 80. The locking assembly 80 is connected to the housing 31 and the movable support 32. The locking assembly 80 is configured to lock the movable support 32, so that the movable support 32 stays in a current position, for example, an extended position or a retracted position. Therefore, the movable support 32 is limited and restricted by the locking assembly 80, and is not easy to move and deviate from the current position. This ensures good position stability of the movable support 32.

In some examples, the locking assembly 80 may lock the movable support 32 in a retracted position, so that when the camera module 60 is in a non-working state, the movable support 32 in the retracted state is not likely to shake or accidentally extend out of the accommodation cavity 31a.

In some examples, the locking assembly 80 may lock the movable support 32 in an extended position, so that when the camera module 60 is in a working state, the movable support 32 in the extended state is not likely to shake or accidentally retract into the accommodation cavity 31a to collide with the camera module 60.

In some examples, the locking assembly 80 is correspondingly disposed in at least one of a retracted position and an extended position of the movable support 32.

In some examples, the locking assembly 80 may include a first locking piece 81 and a second locking piece 82. One of the first locking piece 81 and the second locking piece 82 is disposed on the housing 31, and the other is disposed on the movable support 32. For example, the first locking piece 81 is disposed on the housing 31, and the second locking piece 82 is disposed on the movable support 32. The first locking piece 81 and the second locking piece 82 lock each other, so that the movable support 32 stays in a current position. For example, the first locking piece 81 and the second locking piece 82 lock each other through magnetic attraction force. For example, the first locking piece 81 and the second locking piece 82 each may be a magnet. When the movable support 32 is in a retracted state, the first locking piece 81 and the second locking piece 82 that are in a retracted position are attracted to each other. When axial force exerted on the movable support 32 is greater than the magnetic attraction force, the first locking piece 81 and the second locking piece 82 are unlocked and separated, and the movable support 32 may move and extend. When the movable support 32 is in an extended state, the first locking piece 81 and the second locking piece 82 that are in an extended position are attracted to each other. When axial force exerted on the movable support 32 is greater than the magnetic attraction force, the first locking piece 81 and the second locking piece 82 are unlocked and separated, and the movable support 32 may move and retract.

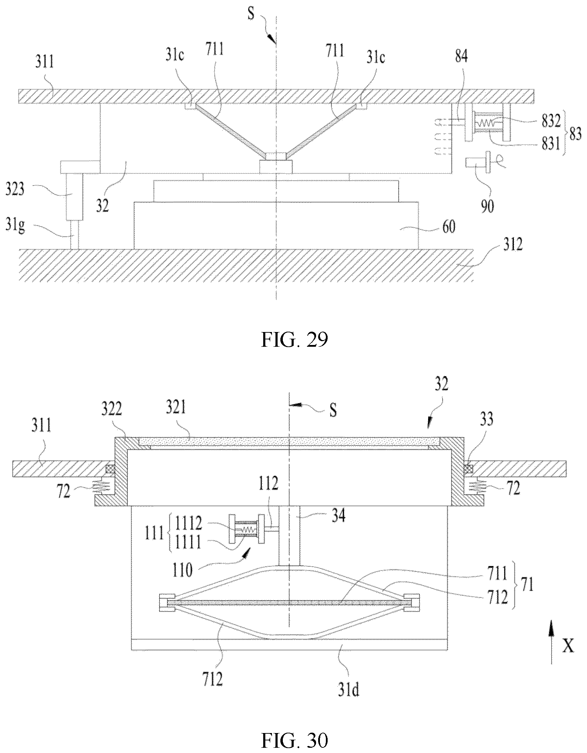

In some examples, FIG. 29 schematically shows a partial sectional structure of the electronic device 10 according to an embodiment of this application. Refer to FIG. 29. The locking assembly 80 includes a driver 83 and a locking body 84. The driver 83 drives the locking body 84 to move relative to the movable support 32, to lock or release the movable support 32. When the movable support 32 moves to a predetermined position, for example, an extended position or a retracted position, the driver 83 is activated, so that the locking body 84 is driven to move and lock the movable support 32. When the movable support 32 needs to be disengaged from a current position, from an extended position or a retracted position, the driver 83 is activated, so that the locking body 84 is driven to move and unlock the movable support 32.

For example, the driver 83 may include an electrostrictive piece 831 and an elastic body 832. For example, the electrostrictive piece 831 may be, but is not limited to, a shape memory alloy body or a piezoelectric telescopic body. The locking body 84 may be a pin shaft. The movable support 32 has a locking hole that cooperates with the locking body 84. The locking body 84 is slidably connected to the housing 31. The elastic body 832 is connected to the locking body 84. The elastic body 832 is located on a side that is of the locking body 84 and that is away from the movable support 32. When the electrostrictive piece 831 is powered on and retracts, the locking body 84 may be driven to move away from the movable support 32, to unlock the movable support 32, and the locking body 84 compresses the elastic body 832. When the movable support 32 needs to be re-locked, the electrostrictive piece 831 is powered off, and the elastic body 832 releases elastic potential energy, to push the locking body 84 to move and extend into the locking hole. In this way, the movable support 32 is locked. For example, the elastic body 832 may be a spring.

For example, the driver 83 may be an electric motor. The locking body 84 may be a pin shaft. The movable support 32 has a locking hole. The locking body 84 is slidably connected to the housing 31. An output shaft of the motor may be threadedly connected to the locking body 84. The motor drives the locking body 84 to move by forward rotation or reverse rotation of the motor, so that the locking body 84 extends into or retracts from the locking hole.

For example, the driver 83 may be an electromagnet, and the locking body 84 may be a telescopic rod. The movable support 32 has a locking hole that cooperates with the locking body 84. The electromagnet is sleeved on the outside of the locking body 84. When the electromagnet is forwardly powered on, the locking body 84 may be driven to retract from the locking hole, to unlock the movable support 32. When the electromagnet is reversely powered on, the locking body 84 may be driven to extend into the locking hole, to lock the movable support 32.

In some implementations, the first driving unit 71 includes a first electrostrictive body 711. The movable support 32 is driven to extend by driving force generated by shrinking of the first electrostrictive body 711. When the movable support 32 extends to a predetermined position, the locking assembly 80 locks the movable support 32 in a current position. In this case, the first electrostrictive body 711 may be powered off, and the first electrostrictive body 711 does not need to be continuously powered on. This helps reduce energy consumption of the electronic device 10, and saves electric energy.

In some implementations, the second driving unit 72 includes a second electrostrictive body 721. The movable support 32 is driven to retract by driving force generated by shrinking of the second electrostrictive body 721. When the movable support 32 retracts to a predetermined position, the locking assembly 80 locks the movable support 32 in a current position. In this case, the second electrostrictive body 721 may be powered off, and the second electrostrictive body 721 does not need to be continuously powered on This helps reduce energy consumption of the electronic device 10, and saves electric energy.

Refer to FIG. 29. In some implementations, the electronic device 10 further includes a position sensor 90. The position sensor 90 is configured to detect a position of the movable support 32. When the position sensor 90 detects that the movable support 32 is moved to a predetermined position, the position sensor 90 may upload position information of the movable support 32 a controller. When the electronic device 10 includes the locking assembly 80, the controller may control the locking assembly 80 to lock the movable support 32 in a current position, so that the movable support 32 may be accurately held in any position.

Refer to FIG. 29. In some possible implementations, the housing 31 includes a first guiding piece 31g. The movable support 32 includes a second guiding piece 323. The first guiding piece 31g and the second guiding piece 323 are movably connected. When the movable support 32 extends out of or retracts into the accommodation cavity, the first guiding piece 31g and the second guiding piece 323 jointly guide the movable support 32, to ensure a smooth movement process of the movable support 32. In some examples, the first guiding piece 31g and the second guiding piece 323 are sleeved with each other to implement a sliding fit.

In some implementations, FIG. 30 is a partial sectional structure of the electronic device 10 including a locking unit 110 according to an embodiment of this application. Refer to FIG. 30. The electronic device 10 further includes the locking unit 110. The locking unit 110 is configured to lock the adapter 34, so that the adapter 34 and the movable support 32 stay in current positions. The locking unit 110 may lock the movable support 32 through the locking adapter 34, to ensure position stability of the movable support 32 and avoid accidental movement.

In some examples, the locking unit 110 may include a driving mechanism 111 and a locking pin 112. The driving mechanism 111 may drive the locking pin 112 to move, to lock or unlock the adapter 34. For example, the driving mechanism 111 may include an electrostrictive piece 1111 and an elastic component 1112. When the adapter 34 needs to be unlocked, the electrostrictive piece 1111 is powered on and retracts, to drive the locking pin 112 to move away from the adapter 34 and compress the elastic component 1112. When the adapter 34 needs to be locked again, the electrostrictive piece 1111 is powered off, and the elastic component 1112 releases elastic potential energy, to push the locking pin 112 to move close to the adapter 34. For example, the electrostrictive piece 1111 may be, but is not limited to, a shape memory alloy body or a piezoelectric telescopic body. The elastic component 1112 may be, but is not limited to, a spring.

An embodiment of this application further provides a housing assembly 30 in the foregoing embodiment, and the housing assembly 30 is used in the electronic device 10. The housing assembly 30 includes a housing 31 and a movable support 32. The housing 31 has an avoidance hole 31b and an accommodation cavity 31a that communicate with each other. The avoidance hole 31b penetrates the housing 31. The movable support 32 is disposed corresponding to the avoidance hole 31b. The movable support 32 includes a light-transmitting part 321. The movable support 32 is movably connected to the housing 31, so that the movable support 32 is capable of extending out of the accommodation cavity 31a through the avoidance hole 3 1b to form an avoidance space or retracting into the accommodation cavity 31a.

In the description of embodiments of this application, it should be noted that, unless otherwise explicitly stipulated and restricted, terms "installed", "joint connection", and "connection" should be understood broadly. For example, the connection may be a fixed connection, may be an indirect connection by using a medium, may be an internal communication between two components, or may be an interactive relationship between two components. A person of ordinary skill in the art may understand specific meanings of the foregoing terms in embodiments of this application based on specific cases.

An apparatus or element in embodiments of this application or an implied apparatus or element needs to have a specific direction and be constructed and operated in a specific direction, and therefore cannot be construed as a limitation to embodiments of this application. In the description of embodiments of this application, unless otherwise exactly and specifically ruled, "a plurality of" means two or more than two.

In the specification, claims, and accompanying drawings of embodiments of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments of this application described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this specification refers to two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "division" relationship between associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. An electronic device, comprising at least:
a housing assembly, comprising a housing and a movable support, wherein the housing has an avoidance hole and an accommodation cavity that communicate with each other, the avoidance hole penetrates the housing, the movable support is disposed corresponding to the avoidance hole, the movable support comprises a light-transmitting part, and the movable support is movably connected to the housing, so that the movable support is capable of extending out of the accommodation cavity through the avoidance hole to form an avoidance space or retracting into the accommodation cavity; and
a camera module, fixedly disposed in the accommodation cavity, wherein a light inlet part of the camera module is opposite to the light-transmitting part, the movable support and the camera module are disposed independently of each other, the camera module comprises a lens assembly, and the entire lens assembly or at least one lens that is close to the movable support and that is in the lens assembly is capable of moving in the avoidance space.

2. The electronic device according to claim 1, wherein the electronic device further comprises a driving assembly, the driving assembly is disposed in the accommodation cavity, the driving assembly has a fastening end and a movable end, the fastening end of the driving assembly is connected to the housing, the movable end of the driving assembly is connected to the movable support, and the driving assembly drives, through the movable end, the movable support to move relative to the housing in an axial direction of the avoidance hole.

3. The electronic device according to claim 2, wherein the driving assembly comprises at least one group of first driving units and at least one group of second driving units, the first driving unit and the second driving unit are disposed independently of each other, the first driving unit drives the movable support to extend out of the accommodation cavity, and the second driving unit drives the movable support to retract into the accommodation cavity.

4. The electronic device according to claim 3, wherein the first driving unit comprises at least one first electrostrictive body, and when the first electrostrictive body shrinks, the first driving unit exerts force on the movable support, to drive the movable support to extend out of the accommodation cavity.

5. The electronic device according to claim 4, wherein one end of the first electrostrictive body is connected to the housing, and the other end of the first electrostrictive body is connected to the movable support.

6. The electronic device according to claim 5, wherein the end of the first electrostrictive body is connected to an inner wall that is of the housing and that faces the accommodation cavity, and the other end of the first electrostrictive body is connected to an end part that is of the movable support and that is located in the accommodation cavity and that is away from the housing.

7. The electronic device according to claim 5 or 6, wherein each group of first driving units comprises two first electrostrictive bodies, and projections or extension lines of the projections of the two first electrostrictive bodies intersect on a first plane; and the first plane is a plane perpendicular to the axial direction.

8. The electronic device according to claim 4, wherein two ends of the first electrostrictive body are separately connected to the housing, a middle area of the first electrostrictive body is connected to the movable support, and in the axial direction, the two ends of the first electrostrictive body are located on a same side of the middle area of the first electrostrictive body.

9. The electronic device according to claim 4, wherein the first driving unit further comprises a first actuating piece, the movable support is connected to the first actuating piece, the first electrostrictive body intersects the axial direction, two ends of the first electrostrictive body are respectively connected to two ends of the first actuating piece, and when the first electrostrictive body shrinks, the first actuating piece is driven to bulge in the axial direction, to drive the movable support to extend out of the accommodation cavity.

10. The electronic device according to claim 9, wherein the first actuating piece is a spring plate; or the first actuating piece comprises two first rod pieces, and one first rod piece is rotatably connected to the other first rod piece.

11. The electronic device according to claim 9 or 10, wherein in the axial direction, the first actuating piece is disposed on each of two sides of the first electrostrictive body; and
the first actuating piece protrudes in a direction away from the first electrostrictive body, the housing comprises a first limiting part, a first actuating piece away from the movable support is connected to the first limiting part, and the movable support is connected to a first actuating piece close to the movable support; or
the first actuating piece protrudes in a direction close to the first electrostrictive body, the housing comprises a first limiting part, a first actuating piece close to the movable support is connected to the first limiting part, and the movable support is connected to a first actuating piece away from the movable support.

12. The electronic device according to any one of claims 4 to 11, wherein the first electrostrictive body comprises a shape memory alloy body or a piezoelectric telescopic body.

13. The electronic device according to any one of claims 3 to 12, wherein the second driving unit comprises at least one second electrostrictive body, and when the second electrostrictive body shrinks, the second driving unit exerts force on the movable support, to drive the movable support to retract into the accommodation cavity.

14. The electronic device according to claim 13, wherein one end of the second electrostrictive body is connected to the housing, and the other end of the second electrostrictive body is connected to the movable support.

15. The electronic device according to claim 14, wherein the housing comprises an adapter part, the adapter part is located on a side that is of the movable support and that is close to the camera module, the end of the second electrostrictive body is connected to the adapter part, and the other end of the second electrostrictive body is connected to an end part that is of the movable support and that is away from the camera module.

16. The electronic device according to claim 14 or 15, wherein each group of second driving units comprises two second electrostrictive bodies, and projections or extension lines of the projections of the two second electrostrictive bodies intersect on the first plane; and the first plane is the plane perpendicular to the axial direction.

17. The electronic device according to claim 13, wherein two ends of the second electrostrictive body are separately connected to the housing, a middle area of the second electrostrictive body is connected to the movable support, and in the axial direction, the two ends of the second electrostrictive body are located on a same side of the middle area of the second electrostrictive body.

18. The electronic device according to claim 13, wherein the second driving unit further comprises a second actuating piece, the movable support is connected to the second actuating piece, the second electrostrictive body intersects the axial direction, two ends of the second electrostrictive body are respectively connected to two ends of the second actuating piece, and when the second electrostrictive body shrinks, the second actuating piece is driven to bulge in the axial direction, to drive the movable support to retract into the accommodation cavity.

19. The electronic device according to claim 18, wherein the second actuating piece is a spring plate; or the second actuating piece comprises two second rod pieces, and one second rod piece is rotatably connected to the other second rod piece.

20. The electronic device according to claim 18 or 19, wherein, in the axial direction, the second actuating piece is disposed on each of two sides of the second electrostrictive body; and
the second actuating piece protrudes in a direction away from the second electrostrictive body, the housing comprises a second limiting part, a second actuating piece close to the movable support is connected to the second limiting part, and the movable support is connected to a second actuating piece away from the movable support; or
the second actuating piece protrudes in a direction close to the second electrostrictive body, the housing comprises a second limiting part, a second actuating piece away from the movable support is connected to the second limiting part, and the movable support is connected to a second actuating piece close to the movable support.

21. The electronic device according to any one of claims 13 to 20, wherein the second electrostrictive body comprises a shape memory alloy body or a piezoelectric telescopic body.

22. The electronic device according to any one of claims 3 to 12, wherein the second driving unit comprises an elastic piece, one end of the elastic piece is connected to the housing, and the other end of the elastic piece is connected to the movable support; when the first driving unit drives the movable support to extend out of the accommodation cavity, the elastic piece accumulates energy; and when the first driving unit stops driving the movable support, the elastic piece releases the energy, to drive the movable support to retract into the accommodation cavity.

23. The electronic device according to claim 2, wherein the driving assembly comprises a motor and a transmission rod, one of the motor and the transmission rod is connected to the housing, the other is connected to the movable support, and the motor drives the transmission rod to move in the axial direction, to drive the movable support to move.

24. The electronic device according to claim 23, wherein the electronic device further comprises a locking mechanism, and the locking mechanism is configured to lock the motor, so that the movable support stays in a current position.

25. The electronic device according to any one of claims 2 to 24, wherein the housing assembly further comprises an adapter, the adapter is connected to the movable support and the driving assembly, and the driving assembly exerts force on the movable support through the adapter, to drive the adapter and the movable support to move.

26. The electronic device according to claim 25, wherein the adapter is movably connected to the movable support in the axial direction, the housing assembly further comprises a cushioning piece, and the cushioning piece is disposed between the movable support and the adapter and generates abutting force in the axial direction.

27. The electronic device according to claim 25 or 26, wherein the electronic device further comprises a locking unit, and the locking unit is configured to lock the adapter, so that the adapter and the movable support stay in current positions.

28. The electronic device according to any one of claims 1 to 27, wherein the electronic device further comprises a locking assembly, the locking assembly is connected to the housing and the movable support, and the locking assembly is configured to lock the movable support, so that the movable support stays in the current position.

29. The electronic device according to claim 28, wherein the locking assembly comprises a first locking piece and a second locking piece, one of the first locking piece and the second locking piece is disposed on the housing, the other is disposed on the movable support, and the first locking piece and the second locking piece lock each other, so that the movable support stays in the current position.

30. The electronic device according to claim 29, wherein the first locking piece and the second locking piece lock each other through magnetic attraction force.

31. The electronic device according to claim 30, wherein the locking assembly comprises a driver and a locking body, and the driver drives the locking body to move relative to the movable support, to lock or release the movable support.

32. The electronic device according to any one of claims 1 to 31, wherein the movable support comprises an annular part, the annular part is movably connected to the housing, the light-transmitting part is disposed at an end part that is of the annular part and that is away from the camera module, and the light-transmitting part is a light-transmitting cover plate.

33. The electronic device according to any one of claims 1 to 32, wherein the housing assembly further comprises a flexible sealing piece, and the flexible sealing piece is disposed between the housing and the movable support.

34. The electronic device according to any one of claims 1 to 33, wherein the housing comprises a rear cover and a middle frame, the rear cover and the middle frame form the accommodation cavity, and the avoidance hole is disposed on the rear cover.

35. The electronic device according to claim 34, wherein the movable support is movably connected to the rear cover.

36. The electronic device according to any one of claims 1 to 35, wherein the housing comprises a first guiding piece, the movable support comprises a second guiding piece, and the first guiding piece and the second guiding piece are movably connected.

37. A housing assembly, used in an electronic device, wherein the housing assembly comprises:
a housing having an avoidance hole and an accommodation cavity that communicate with each other, wherein the avoidance hole penetrates the housing; and
a movable support, disposed corresponding to the avoidance hole, wherein the movable support comprises a light-transmitting part, and the movable support is movably connected to the housing, so that the movable support is capable of extending out of the accommodation cavity through the avoidance hole to form an avoidance space or retracting into the accommodation cavity.
